(19) **Europäisches Patentamt** / **European Patent Office** / **Office européen des brevets**

(11) **EP 4 660 898 A1**

(12) **EUROPEAN PATENT APPLICATION**

(43) Date of publication:
**10.12.2025 Bulletin 2025/50**

(21) Application number: **24315273.3**

(22) Date of filing: **07.06.2024**

(51) International Patent Classification (IPC):
**G06N 10/40** (2022.01)    **G06N 10/60** (2022.01)

(52) Cooperative Patent Classification (CPC):
**G06N 10/40; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Pasqal**
**91300 Massy (FR)**

(72) Inventors:
• **Henry, Louis-Paul**
**91300 MASSY (FR)**
• **Coelho, Wesley da Silva**
**91300 MASSY (FR)**
• **Pearson, Nathalie**
**91300 MASSY (FR)**
• **Valor Menendez, Lucia**
**91300 MASSY (FR)**
• **Bermot, Elie**
**91300 MASSY (FR)**

(74) Representative: **Slingsby Partners LLP**
**1 Kingsway**
**London WC2B 6AN (GB)**

(54) **METHODS AND SYSTEMS FOR A NEUTRAL ATOM QUANTUM COMPUTER**

(57)  Ther is presented a method for positioning one or more traps of a plurality of traps; the plurality of traps for holding a plurality of atoms. The plurality of atoms for representing qubits for a neutral atom quantum computation. The neutral atom quantum computation for finding one or more solutions to a problem. The problem being applied to data represented by a plurality of nodes of a graph. A first atom of the plurality of atoms represents a first node of the plurality of nodes. A second atom of the plurality of atoms represents a second node of the plurality of nodes that is different to the first node; the first atom being a different atom to the second atom. The method comprises - determining, using a computer processor, a distance between the first atom and the second atom using a first value associated with an amplitude of a first Electro-Magnetic, EM, radiation for inputting to the first atom during the neutral atom quantum computation. The distance further determined using a second value associated with an amplitude of a second EM radiation for inputting to the second atom during the neutral atom quantum computation. The amplitude of the first EM radiation being different to the amplitude of the second EM radiation. The distance corresponding to an edge between first and second node. The method further using the distance to position the one or more traps.

Fig. 3d

**Description**

<u>Field</u>

The present invention is in the field of quantum computing, in particular, but not limited to encoding graphs on a neutral atom quantum computer (NAQC).

<u>Background</u>

Graphs are mathematical constructs of graph theory than contain a plurality of vertices (also referred to as 'nodes') and may be used to represent different types of data. Nodes are typically used to represent entities, for example cities on a map or people in a social network. Between certain nodes reside edges that represent connections between the nodes, such as distance between cities or relationship strength between social network members.

Different types of graphs exist and can be classified in different ways. Geometric graphs are a large class of graphs that are defined by geometric means. Examples of geometric graphs are planar graphs wherein the nodes are embedded as points in a Euclidean plane with edges that do not cross each other. Another type of graph is a disk graph that is set on a Euclidean plane wherein edges are drawn between vertices if and only if the corresponding points are within a given disk of a certain radius. When considering two nodes, the radius for node 'u' is $r_u$ whilst the radius for node v is $r_v$., such that an edge connects the pair of nodes {u, v} only if the distance between them is below $r_u + r_v$. Disc graphs may define their edge according to relative criterion, for example a maximum radius disk graph provides an edge only if the distance between node u and v is below $f(r_u, r_v.) = \max(r_u + r_v.)$.

A Unit-Disk Graph (UDG) is a type of geometric graph where each vertex represents a point in the Euclidean plane, and edges are drawn between vertices if and only if the corresponding points are within a fixed unit distance from each other. In other words, a UDG is a graph in which vertices are associated with points in the plane, and there is an edge between two vertices if and only if the Euclidean distance between their corresponding points is at most one.

Graphs are used to solve graph problems. Often graph problems involve the finding of sets of nodes wherein an 'independent set' is a set of nodes in a graph where no two nodes of the set are adjacent, i.e. no two nodes in the independent set are directly connected to each other with a single edge.

Many graph problems exist including Max-cut and MIS. Max-Cut finds a continuous cut that divides the nodes into two sets, S and T, such that the number of edges between S and T is as large as possible. Another graph problem is the Maximum independent Set (or MIS), the largest subset of nodes not connected to each other (or the largest edgeless induced subgraph).

Quantum computers have been described to be used to encode graph problems. Prior disclosed methods have needed to consider, to at least some degree, the physics of the quantum system representing the qubits in the quantum computation in order to effectively embed the graph problem. The consideration of the physics affects how edges between nodes are established in the physical system.

Different types of quantum computer exist including photonic, ion-trap, superconducting and NAQCs. NAQC's are a type of quantum computer wherein a register of spatially separated atoms are typically held in optical traps within a vacuum chamber. The trapped atoms represent the qubits and are usually all of the same type of atom, for example Rubidium-87. The atoms that are used in the quantum computation to represent qubits may also referred to herein as 'qubit-atoms'. The NAQC typically uses different atomic energy levels to encode the two measurable qubit output states of the quantum computation.

In existing NAQC's, Electro-Magnetic (EM) radiation of the same amplitude and wavelength is globally imparted upon all the qubit atoms during the quantum computation to facilitate changes in energy levels. Atoms transitioned to a Rydberg energy state using the EM radiation can prevent neighbouring atoms from being promoted to the same energy state using the Rydberg blockade and hence entangle the atoms. When determining whether another atom is suppressed from transitioning to a Rydberg energy level, the Rydberg blockade radius $R_b$ is used as shown in equation 1. In equation 1 $C_6$ is a constant depending on the Rydberg level, $\Omega$ is the Rabi frequency, which is determined by the amplitude of the EM radiation, and $\hbar$ is the reduced Planck's constant ($h/2\pi$).

$$R_b = \left(\frac{C_6}{\hbar\Omega}\right)^{1/6}$$

[Equ. 1]

When a neighbouring atoms' distance to the Rydberg-excited atom is less than $R_b$, then the neighbouring atom is blockaded from transitioning to the Rydberg energy level.

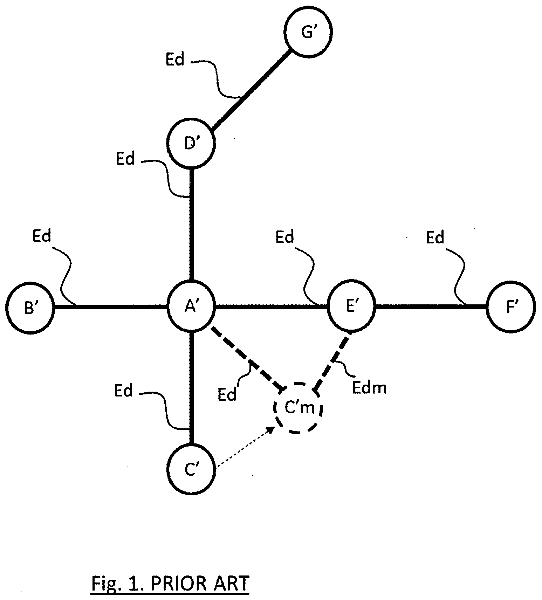

Figure 1 shows a prior art example demonstrating a UDG graph embedded by a NAQC. In this example, a graph of seven nodes A', B', C', D', E', F', G' that are connected by six edges 'Ed' are implemented by seven identical atoms of a NAQC. The intended edges Ed are shown in solid lines. The node C'm and dashed line edges are discussed later and are not part of this initial discussion. The positions of the nodes A'-G' in figure 1 are also representing the relative geometric positions of the qubit atoms. For this prior art example, we assume the NAQC calculation is one to find the MIS of the graph. We also assume the calculation is performed using an analogue mode of operation of the NAQC wherein a time dependent modulation of the EM radiation and a fixed spatial configuration affects a varying Hamiltonian, which results in the solution of the graph problem. The atoms represented by nodes A'-G' are globally addressed with EM radiation. For this prior art example, the global EM radiation amplitude applied to each atom induces a Rydberg blockade radius for each atom of $R_b$=1 (arbitrary units of distance) and only the node-node distances represented by edges 'Ed' have a distance value less than 1.

NAQCs are a natural choice for embedding and solving MIS-based graph problems because, in prior art such as figure 1, each atom is illuminated by the same EM radiation wavelength and amplitude and thus has the same Rydberg blockade radius, setting the size of the unit disk.

When all atoms are illuminated by the same EM radiation, it is not known before or during the quantum calculations which atoms will be promoted to the Rydberg energy level for atoms with other neighbouring atoms within the Rydberg blockade radius. For example, for two atoms 'u' and 'v' that have an atom-atom distance less than the Rydberg blockade radius, it may be that either 'u' excites to the Rydberg energy level and 'v' does not, or vice versa. Typically, in NAQC, multiple runs of the same quantum computation are made to see the distribution of results, for example 10 or 100 times. Each run has the same EM radiation input during the computation and the qubit-atom configuration is the same. The collected results are then post-processed, or otherwise analysed by a user manually, to see what solutions the quantum computer has found and whether one or more of those solutions represent the ideal solution for the problem. Turning back to the prior art example in figure 1, and ignoring the node C'm and dashed edges for now, when multiple runs are performed to find solutions to the MIS problem on the graph of figure 1, the results may be:

   Run 1) Atoms representing nodes B', C', D', E' are not promoted to the Rydberg energy level whilst the other nodes are.

   Run 2) Atoms representing nodes B', C', F' D', are not promoted to the Rydberg energy level whilst the other nodes are.

   Run 3) Atoms representing nodes B', C', D', G' are not promoted to the Rydberg energy level whilst the other nodes are.

   Run 4) Atoms representing nodes B', C', F' G', are not promoted to the Rydberg energy level whilst the other nodes are.

Each of the runs 1-4 represent different viable MIS solutions to the graph of figure 1.

The prior art method of performing a NAQC computation described in figure 1 may encounter difficulties in practice in a variety of ways. Firstly, if the optical traps used to hold the qubit atoms are incorrectly positioned. For example, if the atom representing node F' is undesirably shifted to 1.3 arb. units away from E', then the atomic register needs to be entirely re-set and the optical trap for node F' moved back closer to E'. This takes extra time and energy. Secondly, it may turn out that the desired optical trap positions are infeasible for the optical trap generating equipment. Taking example above, if F' is positioned 1.3 arb. units away from E', then this may be as a result of a physical limitation of the optical trap generating equipment rather than an error in set-up parameters. In either of these two examples above, the incorrect position of the qubit-atom representing node F' will lead to an incorrect embedding of the graph problem. This in turn would lead to incorrect results from the quantum computation because the qubit atom for F' is outside the Rydberg blockade radius of E', and vice versa, leading to the edge between nodes E' and F' being incorrectly encoded. Other issues may exist, for example if atom C' were to be undesirably trapped in the position shown in figure 1 as C'm because of an undesired positioning of optical trap for atom C', then C' would not only have the edge to A' encoded (as desired), but also another, undesired edge Edm to atom E'. Thus, non-optimum spatial positions of qubit atoms may lead to unwanted edges being encoded and/or required edges not to be encoded.

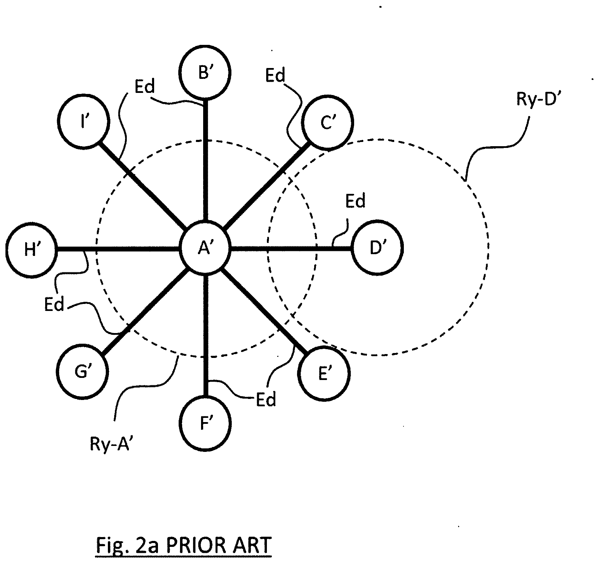

Figure 2a shows another example of a geometric graph of the prior art wherein nodes A', B', C', D', E', F', G', I' are nodes that are edge connected in a hub-spoke arrangement. The positions of the nodes are in a single Euclidean plane and the corresponding positions of the qubit-atoms of a NAQC are in the same relative positions shown in figure 2a. As previously discussed, in order to encode an edge between two qubit atoms (hence two nodes), at least a first of a qubit-atom pair needs to be prevented to transition to the Rydberg energy level by the other atom of the pair when that other atom is in the Rydberg energy state. For purposes of discussion, it is assumed nodes A'-I' may refer to qubit atoms A'-I'. A central node A' is connected to each of the other nodes B'-I' by a respective single edge Ed. The distance between the central node A' and each of the peripheral nodes B'-I' is the same. Each peripheral node B'-I' is only connected to another single common node (A') directly by a single edge Ed. Each peripheral node B'-I' is located upon a common peripheral radius from the central node A'. Each peripheral node B'-I' is spaced apart from each nearby adjacent peripheral node by the same distance around the circumference defined by the perimeter radius. The graph of figure 2a cannot be correctly implemented using a unit disk (UD) encoding with a global EM radiation wherein a single qubit atom of a NAQC represents a single node and there a no more qubit-atoms than nodes (as per Figure 2a). Using a NAQC global addressing scheme of the prior art, each qubit atom receives the same wavelength and amplitude of EM radiation at the same time, therefore each qubit atom that is excited to the Rydberg state manifests the same Rydberg blockade radius. Figure 2a shows two circular blockade regions, Ry-A' and Ry-D', centred upon atoms A' and D' respectively. As shown in figure 2a, the blockade regions have the same blockage radius, hence the same circle size. In order for the peripheral atoms B'-I' not to encode an edge between them, each peripheral atom B'-I' is positioned just outside of the blockage region of the nearest neighbour peripheral atom. This is shown in figure 2a by atom E' and C' being outside of blockade region Ry-D' set by the atom D' being excited to the Rydberg energy level. This entails that the radius that the qubit atoms B'-I' are located about A' is greater than the Rydberg blockade radius of the atoms. Figure 2a shows this by the blockage region Ry-A' being too small to encompass any of the peripheral atoms B'-I' because of the distance each peripheral atom B'-I' needs to be away from A'. The unit disk requirement to encode an edge for this geometrical layout of the graph in figure 2a is therefore prohibitive to encoding this geometrical graph with only one atom per qubit.

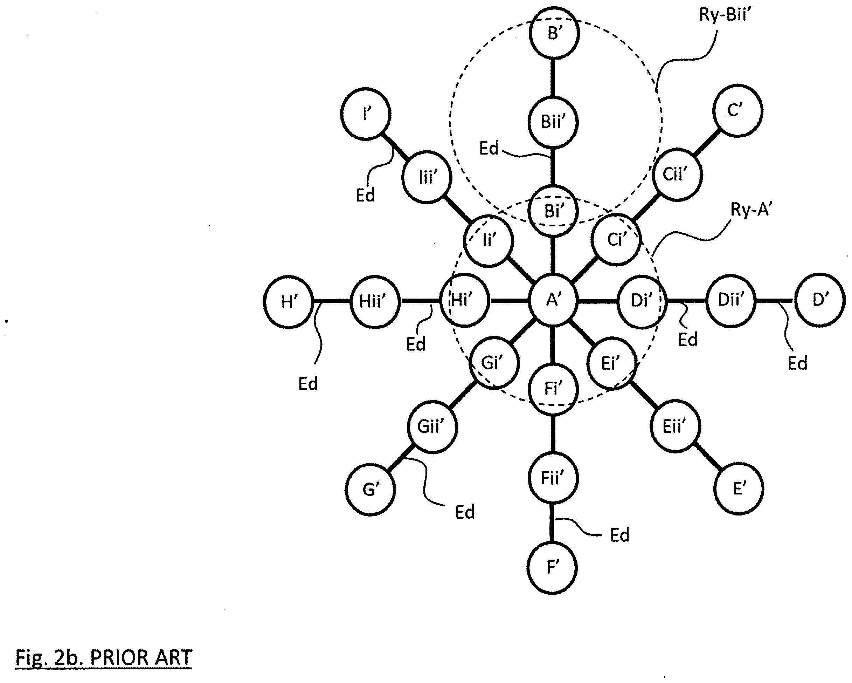

Figure 2b shows a prior art method of circumventing the problem discussed for figure 2a wherein the nodes of the graph desired to be encoded are still the nodes A'-I' as shown in figure 2a. All of the qubit atoms are input the same global EM radiation, i.e. the same amplitude and wavelength, at the same time. In figure 2b, extra 'ancillary' qubit atoms are used to correctly encode the graph nodes and edges of figure 2a. These extra qubit atoms do not correspond to any nodes of the desired graph, namely A', B', C', D', E', F', G', H', I'; instead, are used to encode the edges between A' and each peripheral atom B'-I'. Further qubit atoms Bi' and Bii' are used to encode the edge between A' and B'. Further qubit atoms Ci' and Cii' are used to encode the edge between A' and C'. Further qubit atoms Di' and Dii' are used to encode the edge between A' and D'. Further qubit atoms Ei' and Eii' are used to encode the edge between A' and E'. Further qubit atoms Fi' and Fii' are used to encode the edge between A' and F'. Further qubit atoms Gi' and Gii' are used to encode the edge between A' and G'. Further qubit atoms Hi' and Hii' are used to encode the edge between A' and H'. Further qubit atoms Ii' and Iii' are used to encode the edge between A' and I'.

The encoding of the atoms A'-B' is discussed as an example of how ancillary qubit atoms Bi' and Bii' are used to encode the edge between A' and B'. If A' is excited to the Rydberg energy level then the blockade region Ry-A' blocks the Rydberg transition for all of Bi', Ci', Di', Ei', Fi', Gi', Hi', Ii'. The Rydberg blockade region Ry-A' is not large enough to encompass any of the other qubit atoms shown in figure 2b. As a result, ancillary qubit atom Bii' is permitted to be excited to the Rydberg energy level and block the Rydberg transition of other neighbouring atoms. The Rydberg blockade radius for ancillary qubit atom Bii' is the same as the blockade radius for qubit atom A'. The only two qubit atoms that Bii' blockades with blockade region Ry-Bii' are atoms Bi' and B'. In other words, A' blocks the Rydberg transition of Bi', but allows Bii' to get excited to the Rydberg energy level to block B'. Qubit atoms Bi' and Bii' therefore do not represent nodes of the graph but are required to encode the graph edge between A' and B'. Similar edges are encoded between atom A' and each peripheral atom C'-I'.

The prior art solution used in figure 2b therefore increases the amount of qubit atoms required to encode a graph using a unit disk edge encoding scheme. Increasing the number of qubit atoms increases the number of optical traps, hence increases the complexity of the set-up. Furthermore, increasing the number of atoms to embed a graph increases the size of the region required to host the qubit atoms. Furthermore, an error may arise when using such an embedding strategy in figure 2b. For example, if A' is exited, it blockades Hi' from being exited. This configuration might let H' be exited whenever Hii' is not. This is because by blockading Hi' to be exited, you won't necessarily have Hii' exited. If Hii' is not exited, H' can be, hence leading to an unfeasible solution for the initial graph, exiting the adjacent nodes A' and H'. One also notes the distinction between a maximum independent set and just an independent set. An independent set on the graph represent by the atoms of figure 2b will not necessarily satisfy the independence conditions of the graph of figure 2a. But the MIS of figure 2b will be the MIS of figure 2a (where in both cases we ignore the ancilla atoms when comparing the graphs). There therefore exists issues in sampling from independent sets, particularly for MIS.

WO 2024/003088 describes having an initial graph of main nodes and then adding in ancillary nodes, into a rearranged graph, to connect the main nodes. The main and ancillary nodes are represented by respective main and ancillary atoms in a quantum computation. A light shift pulse is provided to the ancillary atoms to define the resonant frequency compared to the main atoms. The same driving EM radiation is applied to all main atoms.

Summary

According to a first aspect there is presented a method for performing a quantum computation using a neutral atom quantum computer, the neutral atom quantum computer comprising a plurality of atoms for representing qubits for the quantum computation; the quantum computation for finding one or more solutions to a problem; the problem being applied to data represented by a plurality of nodes of a graph; wherein: I) a first atom of the plurality of atoms represents a first node of the plurality of nodes; II) a second atom of the plurality of atoms represents a second node of the plurality of nodes that is different to the first node; the first atom being a different atom to the second atom; the method comprising: A) using a computer processor to encode the graph and problem, the encoding comprising at least: a) a first value associated with a first amplitude of a first Electro-Magnetic, EM, radiation for inputting to the first atom during the quantum computation; the first EM radiation for exciting the first atom to a Rydberg energy level; b) a second value associated with a second amplitude of a second EM radiation for inputting to the second atom during the quantum computation; the amplitude of the first EM radiation being different to the amplitude of the second EM radiation; the second EM radiation for exciting the second atom to a Rydberg energy level; c) a third value associated with a distance between the first atom and second atom; the distance for allowing a Rydberg blockade between the first atom and the second atom; the Rydberg blockade encoding an edge of the graph between the first node and the second node; B) using the computer processor to determine a plurality of parameters from the first, second and third values; C) outputting the plurality of parameters to the neutral atom quantum computer; D) using the neutral atom quantum computer to perform the quantum computation using the plurality of parameters.

Any of the steps A-D of the first aspect may be used with any of the methods of the second and third aspects presented underneath. The first, second and third aspects may be adapted according to any teaching herein including, but not limited to, any of the following options.

The Rydberg energy levels that the atoms are excited to are the Rydberg energy levels for that particular atom, i.e. its own Rydberg energy level. The Rydberg energy level for one atom may be different to another atom or the same.

The present disclosure describes examples where a single atom may represent a single node, however multiple atoms may be used to represent a particular node, for representing different features (e.g., weights) of the same node, for example. Also, one might decide to not represent a given sub-set of nodes of the graph. This might be the case, for instance, when one knows that the related node will never be presented in any good solution for the problem (e.g., nodes that are connected to all other nodes in the graph that is given as an input instance to the Maximum Independent Set problem). Thus, optionally, the nodes of the graph may comprise a first plurality of nodes whilst the plurality of atoms represent a second plurality of nodes of the graph wherein the number of nodes of the first plurality of nodes is different to the number of nodes in the second plurality of nodes. Furthermore, optionally, the number of nodes in the first plurality of nodes is greater than the number of nodes in the second plurality of nodes. Furthermore, optionally, the first plurality of nodes comprises all of the second plurality of nodes. The method may further include a step of using a computer processor to determine the second plurality of nodes from analysing the first plurality of nodes. This analysis may optionally include determining whether one or more nodes is within one or more solutions to the problem and removing nodes from the first plurality of nodes to generate the second plurality of nodes. The analysis may include determining a likelihood of one or more nodes forming part of a solution. The likelihood may be represented by one or more values. The one or more likelihood values may be compared to a threshold likelihood value to determine whether the said node is removed from the first plurality of nodes. The step may remove the node from the first plurality of nodes if the likelihood value is above a likelihood threshold value. For example, if the analysis determined a likelihood value of 95% whilst the threshold value was 90%, then the said node would not form part of the second plurality of nodes embedded by the NAQC and represented by the atoms.

Furthermore, optionally, the number of nodes of the plurality of nodes represented by the atoms may be the same as, less than, or more than, the number of atoms representing the said plurality of nodes. Optionally, for any of the plurality of nodes embedded by the neutral atom quantum computation, a set of two or more atoms may represent the said node. Optionally, the neutral atom quantum computer may embed the graph by allocating more atoms to nodes with a greater weight than nodes with lesser weight. Optionally the first node is represented by a first set of one or more of the atoms. Optionally the first node is represented by a second set of one or more of the atoms wherein the atoms of the second set are different atoms to those of the first set. For instance, the first node may be represented by two atoms whilst the second node is represented by one atom, or the first node is represented by two atoms whilst the second node is represented by three atoms. The number of atoms representing a node may be proportional to a feature of the node. This feature may be a weight.

Optionally, the method further comprises the step of measuring the energetic states of the first atom and second atom after the quantum computation. Optionally, the measuring may be done by imaging the plurality of atoms. The imaging may detect atomic fluorescence. Optionally, an electronic signal is output by the detector, such as a camera, and sent to the computer processor. Optionally, the computer may receive the electronic signal from the detector and determine a solution to the problem from the signal.

Optionally, the method comprises determining a solution to the problem form the said measurement.

Optionally, the performance of the quantum computation is a first performance of the quantum computation, wherein method further comprises: I) using the neutral atom quantum computer to further perform the quantum computation using the plurality of parameters; I) measuring the energetic states of the first atom and second atom after the further performance of the quantum computation; II) determining a solution to the problem from the measurement of the first and second performance.

Optionally, the encoding uses a Hamiltonian operator. Optionally, the method receives the first value. Optionally, the method receives the second value. Optionally, the method receives the third value.

Optionally, the first value comprises a Rabi frequency associated with the first atom. Optionally, the second value comprises a Rabi frequency associated with the second atom. Optionally, the third value comprises the distance.

Optionally, the method uses the computer processor to determine the first value using the second value and the third value. Optionally, the method determines a first Rydberg blockade radius for the first atom by: A) determining a second Rydberg blockade radius for the second atom using the second value; B) using the third value and the second Rydberg blockade radius to determine the first Rydberg blockade radius.

Optionally, the method determines the first value from the first Rydberg blockade radius. Optionally, the method determines the first value by: A) determining an effective Rydberg blockade radius from the third value; B) using the second Rydberg blockade radius and effective Rydberg blockade radius to determine the first Rydberg blockade radius.

Optionally, the method uses the computer processor to determine the third value using the first value and the second value.

Optionally, the method: A) determines a first Rydberg blockade radius for the first atom using the first value; B) determines a second Rydberg blockade radius for the second atom using the second value; C) determines an effective Rydberg blockade radius for the first and second atoms using the first and second Rydberg blockade radius; D) determines the third value using the effective Rydberg blockade radius.

Optionally, the distance associated with the third value is less than the effective Rydberg blockade radius.

Optionally, the plurality of parameters comprises a parameter for determining an amplitude of EM radiation output by a first optical system towards the first atom. Optionally, the first optical system comprises at least one of: an amplitude modulator, an EM radiation source.

Optionally, the plurality of parameters comprises a parameter for determining an amplitude of EM radiation output by a second optical system towards the second atom.

Optionally, the second optical system comprises at least one of: an amplitude modulator, an EM radiation source.

Optionally, the plurality of parameters comprises a parameter for determining a distance between: a first optical trap for trapping the first atom; and, a second optical trap for trapping the second atom.

Further according to the first aspect there is presented a system for performing a quantum computation using a neutral atom quantum computer, the neutral atom quantum computer comprising a plurality of atoms for representing qubits for the quantum computation; the quantum computation for finding one or more solutions to a problem; the problem being applied to data represented by a plurality of nodes of a graph; wherein: I) a first atom of the plurality of atoms represents a first node of the plurality of nodes; II) a second atom of the plurality of atoms represents a second node of the plurality of nodes that is different to the first node; the first atom being a different atom to the second atom; the system comprising: A) a computer processor configured to encode the graph and problem, the encoding comprising at least: a) a first value associated with a first amplitude of a first Electro-Magnetic, EM, radiation for inputting to the first atom during the quantum computation; the first EM radiation for exciting the first atom to a first Rydberg energy level; b) a second value associated with a second amplitude of a second EM radiation for inputting to the second atom during the quantum computation; the amplitude of the first EM radiation being different to the amplitude of the second EM radiation; the second EM radiation for exciting the second atom to a second Rydberg energy level; c) a third value associated with a distance between the first atom and second atom; the distance for allowing a Rydberg blockade between the first atom and the second atom; the Rydberg blockade encoding an edge of the graph between the first node and the second node; the computer processor further configured to: determine a plurality of parameters from the first, second and third values; output the plurality of parameters to the neutral atom quantum computer; B) the neutral atom quantum computer, wherein the neutral atom quantum computer is configured to perform the quantum computation using the plurality of parameters.

The system of the first aspect may be adapted according to any teaching herein, including, but not limited to any optional features or configurations described for the method of the first aspect.

According to a second aspect there is presented a method for positioning one or more traps of a plurality of traps; the plurality of traps for holding a plurality of atoms; the plurality of atoms for representing qubits for a neutral atom quantum computation; the neutral atom quantum computation for finding one or more solutions to a problem; the problem being applied to data represented by a plurality of nodes of a graph; wherein: A) a first atom of the plurality of atoms represents a first node of the plurality of nodes; B) a second atom of the plurality of atoms represents a second node of the plurality of nodes that is different to the first node; the first atom being a different atom to the second atom; the method comprising: I) determining, using a computer processor, a distance between the first atom and the second atom using: i) a first value associated with an amplitude of a first Electro-Magnetic, EM, radiation for inputting to the first atom during the neutral atom quantum computation; ii) a second value associated with an amplitude of a second EM radiation for inputting to the second atom during the neutral atom quantum computation; the amplitude of the first EM radiation being different to the amplitude of the second EM radiation; the distance corresponding to an edge between first and second node; II) using the distance to position the one or more traps.

The method of the second aspect may be adapted according to any teaching herein, including but not limited to anyone or more of the following.

Optionally, the traps comprise optical traps.

Optionally, the first and second EM radiation comprise respective first and second wavelengths, the optical traps comprise a trapping EM radiation comprising a wavelength different to the first and second wavelength.

Optionally, using the distance comprises outputting, to a neutral atom quantum computer, a control signal comprising data associated with the distance.

Optionally, using the distance comprises using an optical trap generation system to generate the plurality of traps using the control signal.

Further according to the second aspect there is presented a system for positioning one or more traps of a plurality of traps; the plurality of traps for holding a plurality of atoms; the plurality of atoms for representing qubits for a neutral atom quantum computation; the neutral atom quantum computation for finding one or more solutions to a problem; the problem being applied to data represented by a plurality of nodes of a graph; wherein: A) a first atom of the plurality of atoms represents a first node of the plurality of nodes; B) a second atom of the plurality of atoms represents a second node of the plurality of nodes that is different to the first node; the first atom being a different atom to the second atom; the system comprising: I) a computer processor configured to determine a distance between the first atom and the second atom using: i) a first value associated with an amplitude of a first Electro-Magnetic, EM, radiation for inputting to the first atom during the neutral atom quantum computation; ii) a second value associated with an amplitude of a second EM radiation for inputting to the second atom during the neutral atom quantum computation; the amplitude of the first EM radiation being different to the amplitude of the second EM radiation; the distance corresponding to an edge between first and second node; II) a trapping apparatus configured to generate the plurality of traps and use the determined distance to position the one or more traps.

The system of the second aspect may be adapted according to any teaching herein, including, but not limited to any optional features or configurations described for the method of the first or second aspect.

According to a third aspect there is provided a method for outputting first Electro-Magnetic, EM, radiation; the first EM radiation for being input to a first atom of a plurality of atoms; the plurality of atoms for representing qubits for a neutral atom quantum computation; the neutral atom quantum computation for finding one or more solutions to a problem; the problem being applied to data represented by a plurality of nodes of a graph; wherein: A) the first atom of the plurality of atoms represents a first node of the plurality of nodes; B) a second atom of the plurality of atoms represents a second node of the plurality of nodes that is different to the first node; the first atom being a different atom to the second atom; the method comprising: I) determining, using a computer processor, a first amplitude of the first EM radiation using: i) a distance between the first atom and the second atom; the distance associated with an edge of the graph connecting the first node and the second node; ii) a value associated with an amplitude of a second EM radiation for inputting to the second atom; the first and second EM radiation for inputting to the respective first and second atoms during the analogue neutral atom quantum computation; the amplitude of the first EM radiation being different to the amplitude of the second EM radiation; II) outputting the first EM radiation comprising the first amplitude.

The method of the third aspect may be adapted according to any teaching herein, including but not limited to anyone or more of the options presented for the first aspect and any of the following.

Optionally, the amplitude of the first EM radiation corresponds to a first Rabi frequency associated with the first atom. Optionally, amplitude of the first EM radiation corresponds to a second Rabi frequency associated with the second atom.

Optionally, the method determines a first Rydberg blockade radius for the first atom by: A) determining a second Rydberg blockade radius for the second atom using the amplitude of the second EM radiation; B) using the distance and the second Rydberg blockade radius to determine the first Rydberg blockade radius. Optionally, the method determines the amplitude of the first EM radiation using the first blockade radius. Optionally, the method determines the first Rydberg blockade radius by: A) determining an effective Rydberg blockade radius from the distance; B) using the second Rydberg blockade radius and effective Rydberg blockade radius to determine the first Rydberg blockade radius.

Further according to the third aspect there is presented a system for outputting first Electro-Magnetic, EM, radiation; the first EM radiation for being input to a first atom of a plurality of atoms; the plurality of atoms for representing qubits for a neutral atom quantum computation; the neutral atom quantum computation for finding one or more solutions to a problem; the problem being applied to data represented by a plurality of nodes of a graph; wherein: A) the first atom of the plurality of atoms represents a first node of the plurality of nodes; B) a second atom of the plurality of atoms represents a second node of the plurality of nodes that is different to the first node; the first atom being a different atom to the second atom; the system comprising: I) a computer processor configured to determine, using, a first amplitude of the first EM radiation using: i) a distance between the first atom and the second atom; the distance associated with an edge of the graph connecting the first node and the second node; ii) a value associated with an amplitude of a second EM radiation for inputting to the second atom; the first and second EM radiation for inputting to the respective first and second atoms during the analogue neutral atom quantum computation; the amplitude of the first EM radiation being different to the amplitude of the second EM radiation; II) an apparatus for outputting the first EM radiation comprising the first amplitude.

The system of the third aspect may be adapted according to any teaching herein, including, but not limited to any optional features or configurations described for the method of the first or third aspect.

The apparatus for outputting the first EM radiation may comprise one or more EM sources and/or one or more EM amplitude modulators, examples of which are provided herein.

The following optional features are applicable to any of the first, second and third aspects detailed above, and any examples of the methods and systems presented herein.

Optionally, the first EM radiation is for exciting the first atom to a Rydberg energy level.

Optionally, the second EM radiation is for exciting the second atom to a Rydberg energy level.

Optionally, the first EM radiation is one of a plurality of excitation EM radiation for exciting the first atom to a Rydberg energy level.

Optionally, the second EM radiation is one of a plurality of excitation EM radiation for exciting the second atom to a Rydberg energy level.

Optionally, the first atom uses a two-photon transition to excite from a first state to the Rydberg energy level.

Optionally, the second atom uses a two-photon transition to excite from a first state to the Rydberg energy level.

Optionally, the first EM radiation and second EM radiation are for inputting to the respective first atom and second atom within a common time period during the quantum computation.

Optionally, the first EM radiation and second EM radiation are for inputting, simultaneously, to the respective first atom and second atom.

Optionally, the wavelength of the first EM radiation is the same as the wavelength of the second EM radiation.

Optionally, the Rydberg energy level for the first atom is the same as the Rydberg energy level as the second atom.

Optionally, the data comprises a plurality of data elements wherein each of the data elements is represented by a different node of the plurality of nodes.

Optionally, the graph is an undirected graph.

Optionally, the graph is a geometric graph.

Optionally, the plurality of nodes lie about a single Euclidean plane.

Optionally, the problem is a Maximal Independent Set problem.

Optionally, each of the plurality of nodes represents an object in a dataset; the problem being applied to the dataset.

In other words, the plurality of nodes, including the first and second nodes, may optionally be nodes of an initial graph data structure that the problem is being applied to and not any extra ancillary nodes of further graphs generated from the initial graph.

Optionally, the solution to the problem is represented by a set of one or more of the plurality atoms.

Optionally, each of the atoms of the set comprise an energy level that is different to the energy level of the plurality of atoms not in the set.

Optionally, the total number of the plurality of atoms is the same as the total number of the nodes of the plurality of nodes.

Optionally, each atom of the plurality of atoms corresponds to a different node of the plurality of nodes.

Optionally, the plurality of atoms are located single Euclidean plane during the quantum computation.

Optionally, the plurality of atoms are arranged as a 2D array.

Optionally, the relative positional arrangement of the plurality of atoms corresponds to the relative positional arrangement of the plurality of nodes.

Optionally, the relative positional arrangement of the plurality of atoms is the same as the relative positional arrangement of the plurality of nodes.

Optionally, the atoms comprise alkali metal atoms.

Optionally, the atoms are Rubidium atoms.

Optionally, the quantum computation is performed using a neutral atom quantum computer.

Optionally, the neutral atom quantum computer comprises:

A) a chamber for accommodating the plurality of atoms;

B) one or more EM radiation sources for generating the first and second EM radiation;

C) an optical trap generation system.

Optionally, the quantum computation comprises an analogue quantum computation.

Optionally, the quantum computation comprises the evolution of a Hamiltonian during the quantum computation, the Hamiltonian corresponding to each of the plurality of atoms. Optionally, the Hamiltonian encodes the time evolution of that energy states of each of the plurality of atoms.

Optionally, the quantum computation comprises inputting a plurality of EM radiation beams to the plurality of atoms, the plurality of EM radiation beams comprising at least the first and second EM radiation.

Optionally, the quantum computation comprises inputting a common EM radiation to both the first and second atoms during a common time period.

Brief description of the drawings

Figure 1 shows a prior art example of a graph;

Figure 2a shows a further prior art example of a graph;

Figure 2b shows a prior art example of encoding the graph of figure 2a with extra atoms;

Figure 3a shows an example of a graph for encoding;

Figure 3b shows a first example of a system of atoms for encoding the graph of figure 3a;

Figure 3c shows a second example of a system of atoms for encoding the graph of figure 3a;

Figure 3d shows the second example of a system of atoms for encoding the graph of figure 3a wherein different blockade radii are used;

Figure 4a shows a further example of a graph for encoding;

Figure 4b shows a further example of a system of atoms for encoding the graph of figure 4a wherein different blockade radii are used;

Figure 5 shows an example arrangement for providing EM radiation to qubit atoms;

Figures 6a-c show examples of methods;

Figure 7 shows a plot of maximum double excitation probability vs atom separation;

Figure 8 shows a plot of maximum occupation of the doubly-excited state with respect to atom separation for a sequentially driven system;

Figure 9a shows blockade radius as a function of $\Omega$ for a global simultaneous system;

Figure 9b shows gradient as a function of $\Omega$ for a global simultaneous system;

Figure 10a shows maximum occupation of a doubly excited state with respect to atom separation for a global simultaneous system;

Figure 10b shows residual values between a full analytic solution for different values of $\Omega$;

Figure 11 show gradient for systems with local simultaneous drive.

Description

The inventors of the present application have identified that the encoding of graphs with quantum computers, in particular, but not limited to NAQC's, with a unit disk scheme presents several issues, some of which are described in the background section. The application therefore presents systems and methods aimed to circumvent such issues. Unlike previous approaches to implementing graphs on NAQCs, wherein a Unit Disk scheme is modelled in the quantum calculation, based on a single Rydberg blockade radius, the present inventors have realised that, for certain neutral atom quantum computations, the Rydberg blockade of one atom by another, requires at least a pairwise consideration of the atoms rather than simply whether the atom excited to the Rydberg level has, itself, a Rydberg radius that encompasses any neighbouring atoms. Thus, given a pair of atoms, whether or not an edge is encoded by the atoms, via a Rydberg blockade, when EM radiation is applied is based on the physics of the EM radiation interacting with both the atoms in the pair.

Prior treatment of NAQCs has assumed that the blockade occurs, hence edge is encoded when the atoms in the pair are within the maximum Rydberg blockade radius. In other words, prior treatment assumed that as long as one of the atoms Ryberg blockade radius encompasses the other in the pair, then the edge is encoded. The inventors have identified that this previous assumption does not always hold. For a pair of atoms, whether an edge is encoded between them may be represented by considering the physics of both atoms. For the example the encoding of a graph edge 'E' between atoms 'u' and 'v' may be a function of the Ryberg blockade radius of atom 'u' and atom 'v' as given by the general relation presented in equation 2:

$$E = \left\{ (u, v) \in V^2 \middle| d_{u,v} \leq f(R_u, R_v) \right\}$$

[Equ. 2]

wherein: V is the total number of vertices in the graph, each represented by a different qubit atom; $d_{u,v}$ is the distance between the two atoms; $R_u$ is the Rydberg blockade radius for atom u; $R_v$ is the Rydberg blockade radius for atom v. The function 'f' may vary depending upon how many atoms are considered being blockaded. For example, the inventors have discovered that for a two-atom system the effective Rydberg blockade radius $R_{eff}$ for the qubit atom-pir is approximated by equation 3:

$$R_{eff} \approx \frac{R_u + R_v}{2}$$

[Equ. 3]

For other collections of neighbouring atoms, for example three atoms in close proximity wherein at least one atom's nominal blockade radius encompasses the other two atoms, other relationships may exist.

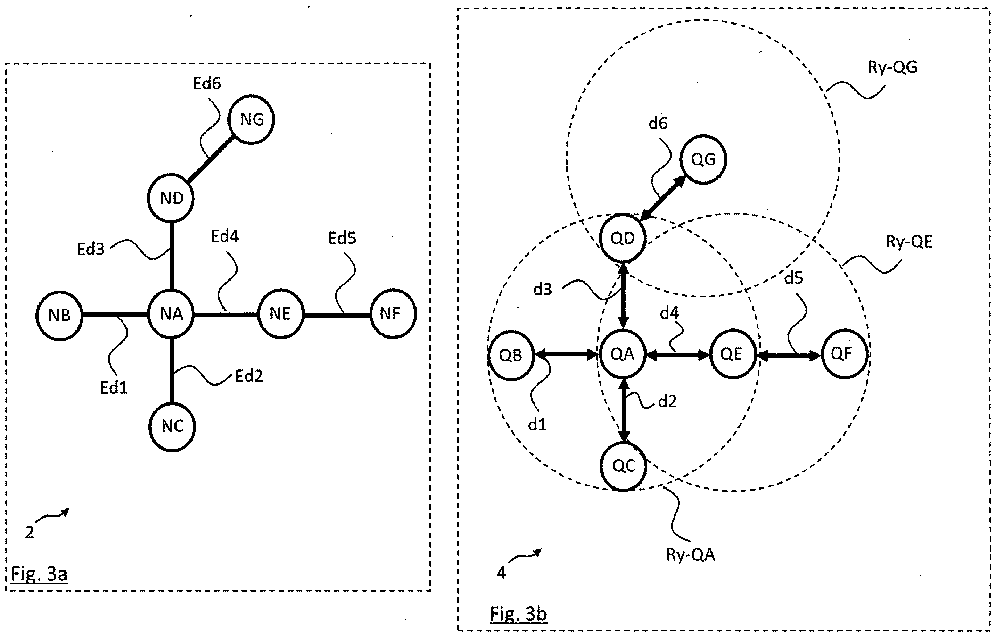

Figure 3a shows a graph 2 similar to that of figure 1a. The graph 2 of figure 3a is an example of a graph for embedding with a NAQC. The graph 2 is a geometric graph in one Euclidean plane. Seven nodes NA, NB, NC, ND, NE, NF, NG are connected by six edges Ed1, Ed2, Ed3, Ed4, Ed5, Ed6. Node NA connects by a single respective edge (Ed1, Ed2, Ed3, Ed4) to each of NB, NC, ND, NE. Node ND connects by edge Ed6 to node NG. Node NE connects by edge Ed5 to node NF. No other edges between nodes are required for this graph 2.

Figure 3b shows a first example 4 of how qubit atoms of a NAQC could represent the graph 2. Each node NA-NG is represented by a respective single qubit atom QA, QB, QC, QD, QE, QF, QG in a single Euclidean plane within a vacuum chamber. The positions of the atoms QA-QG are placed relative to each other to replicate the relative positions of the nodes NA-NG. With this perfect correspondence between node position and qubit position, a single global EM radiation may be input into the system 4 of qubit atoms QA-QG such that each qubit atom QA-QG receives, at the same time, the same wavelength and amplitude. The perfect 1:1 correspondence of node-atom relative position allows for the global EM radiation to correctly encode the graph 2 with a UD edge defining scheme, wherein each atom QA-QG can, potentially, be excited to the same Rydberg energy level with the same Rydberg blockade radius, hence blockade region. For each required edge Ed1-6 the corresponding node pair is separate by a respective distance d1, d2, d3, d4, d5, d6 wherein the magnitude of the distance values each of d1-d6 are the same. For illustrative purposes, the blockade regions for atoms QA, QE and QG are shown with dashed circles Ry-QA, Ry-QE and Ry-QG respectively. The amplitude and wavelength of the global EM radiation is only able to generate blockade regions of sufficient size such that only the required edges Ed1-6 are encoded in the system of atoms 4. For example, if QE is excited to the Rydberg energy level then it will only be able to block the same Rydberg transition for qubit atoms QA and QF, hence encoding: the edge Ed4 between NE and NA; and, and edge Ed5 between NE and NF.

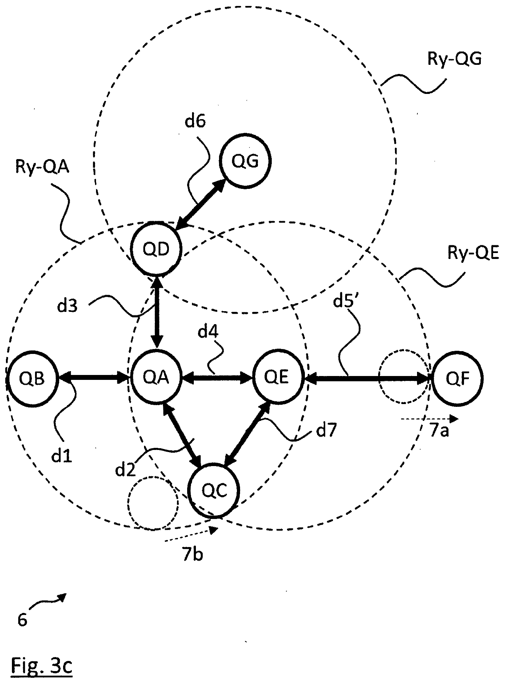

Figure 3c shows a further example 6 of a system of qubit atoms set-up to encode the graph 2 of figure 3a wherein like references to figure 3b represent like features. In this example 6, qubit atoms QC and QF are positioned relative to the other qubit atoms QA, QB, QD, QE, QG, in locations that do not correspond to the geometrical arrangement of the nodes in graph 2. Such a deviation from the ideal 1:1 geometrical arrangement of figure 3a may occur for a variety of reasons as discussed elsewhere herein, such as incorrect calculation of optical traps for the qubit atoms and/or inability of the equipment for creating the traps to be able to reproduce the geometrical arrangement of figure 3a.

Qubit atom QF has been shifted 7a directly away from qubit atom QE to an atom-atom distance of d5' such that it is now outside of the blockade region Ry-QE. Qubit atom QC has been shifted 7b in a direction towards qubit atom QE such that it is now within both the blockade regions Ry-QA and Ry-QE and has a distance d7 between it (QC) and QE. If a unit disk edge encoding regime was implemented with this system of atoms 6 by applying a common amplitude and common wavelength to all qubit atoms QA-QG then the edge Ed5 between node NE and NF would not be encoded because the distance d5' puts QF outside the blockade region Ry-QE of qubit atom QE. However, an extra (undesired) edge between QE and QC is brought about by the reduced distance d7.

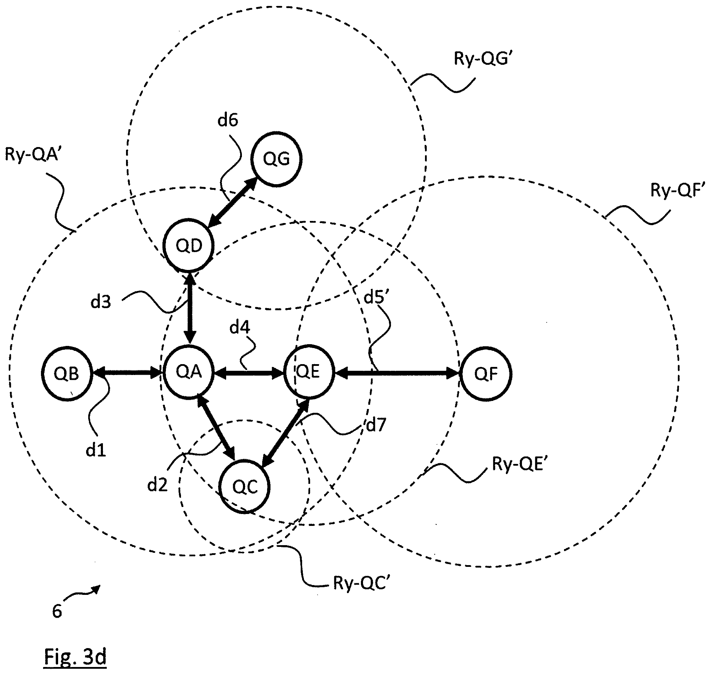

Figure 3d shows the same qubit system 6 of figure 3c wherein the present application does not implement a global UD edge defining scheme across all the atoms. In figure 3d different qubit atoms are provided with at least one different EM radiation during the quantum computation such that at least at one time period, at least one of the qubit atoms receives at least: a) a different wavelength; and/or b) a different amplitude of EM radiation. The different EM radiation entails that a different Rydberg blockade radius is inducible on those particular atoms(s). By doing this, the methods and systems of the present application may encode the desired graph of figure 3a without needing to reset the register, or indeed, be able to encode the graph if the optical trapping equipment is unable to geometrically reproduce the required qubit-atom positions to give 1:1 positional correspondence with the graph nodes of figure 3a.

The following describes one example of how different EM radiation may be used to input into different qubit-atoms during a NAQC. It is to be understood that the following description of which qubit atoms receives higher or lower amplitudes of EM radiation is one example of how the present application could encode the graph of 3a with the qubit atom positions of figure 3d and that other choices of EM radiation may be used. It should also be understood that the example discussed underneath is one example and that other graphs and qubit arrangements may be used including different arrangements of qubits and/or different numbers of qubits.

EM radiation of a first type is input into atoms QB, QD, QE and QG. The first type may be from the same or different sources of EM radiation, but the first type has a common amplitude and wavelength input to all these atoms. Each of atoms QB, QD, QE, QG have the same blockade radius. Atoms QG and QE are shown for illustrative purposes encircled by their respective blockade regions Ry-QG', Ry-QE'.

EM radiation of a second type is input into atom QA. This EM radiation is targeted only at atom QA and induced a blockade radius that is larger than that of QB, QD, QE, QG. Setting aside QC for now, because each of the atoms QB, QE, QD that atom QA is required to share an edge is blockaded by QA, since the effective Rydberg blockade radius is larger than the respective atom distances d1, d4, d3. Atom QA is shown for illustrative purposes encircled by its respective effective blockade region Ry-QA'. Edges are therefore correctly encoded between QA and atoms QB, QE, QD.

EM radiation of a third type is input into atom QC to give a smaller blockade radius than any other qubit atom in this system 6. Atom QC is shown for illustrative purposes encircled by its respective blockade region Ry-QC'. The blockade radius of qubit QC is small enough so that neither QA or QE are within the corresponding blockade region Ry-QC'. The effective blockade radius for the atom pair QE/QC is approximate to [Rb(QE)+Rb(QC)]/2 which is less than atom spacing d7, therefore an edge is not encoded between nodes NC and NE. However, because the blockade radius of QA has increased, the effective blockade radius between atoms QA and QC is approximately [Rb(QA)+Rb(QC)]/2 which is more than atom distance d2, therefore the edge between Node NA and NC is correctly encoded.

In this above situation it is assumed that the two-atom effective Rydberg blockade holds despite there being three atoms QA, QE, QC in close proximity.

EM radiation of a fourth type is input to Atom QF. The blockade radius induced by this EM radiation is larger than that of QE. Atom QF is shown for illustrative purposes encircled by its respective blockade region Ry-QF'. The blockade region Ry-QE' for atom QE does not encompass atom QF. However, because the blockade radius of QF has increased, the effective blockade radius between atoms QE and QF is approximately [Rb(QE)+Rb(QF)]/2 which is more than atom distance d5', therefore the edge between Node NE and NF is correctly encoded.

In the above example of figure 3d, different EM radiation is imparted onto the different qubit atoms. This, in turn, allows the register of qubit atoms to still correctly encode the desired graph of figure 3a without needing to either include extra ancillary qubit atoms, nor requiring the atom register to be reset to have corrected optical trap positions. Implementing this example and other examples may use a multiphoton excitation regime whereby, for example, a global EM radiation applied to all atoms of a first energy, whilst further different EM radiation (as described above) is applied to the atoms, at the same time as the global EM radiation. An example of this is a two-photon excitation regime wherein two photons of different wavelengths are used to promote atoms from a ground state to a Rydberg energy state. The choice of wavelength may be dependent upon the atomic system used. Examples of wavelengths to be used to excite atoms are visible and infrared wavelengths.

In general, for any example presented herein, the graph that the atoms of the NAQC may represent may be a new graph generated from an original graph wherein the new graph and the original graph are different. This transformation from original to new graph may be completed using a graph transformation module of a classical computer. The new graph and the original graph may be different to each other in one or more of several ways. These ways may include, but are not limited to, having different numbers of nodes and/or different numbers of edges.

The new graph preferably uses a mapping such that throughout the new graph one atom represents one node. The new graph may also use a mapping such that multiple atoms represent one node may be permitted. When a new (transformed) graph is used to encode the NAQC, the nodes of the original graph may relate to the atoms of the NAQC in several ways including, but not limited to any of the following mappings which may be used for different nodes/atoms.

A first mapping is that one original node may be represented two or more atoms of NAQC. This may result from the decision to use more atoms for those nodes that are more important (e.g., more atoms represent an original node being weighted differently to other original nodes)

A second mapping is that one original node is represented by no atom. This may result from the decision to remove that node from the embedding because it's not important or it makes the embedding more difficult, hence simplifying the problem without degradation the final solution (if possible).

A third mapping is that two (or more) nodes are represented by one atom. This may result from the decision to encode two nodes if they are similar.

The term 'mapping' in the above discussions describes how original nodes may potentially be represented by the NAQC atoms. It may be that any of one or more of the first to third mapping examples may be present in an embedding, and/or that multiple original nodes throughout the original graph use the same mapping type within the embedding.

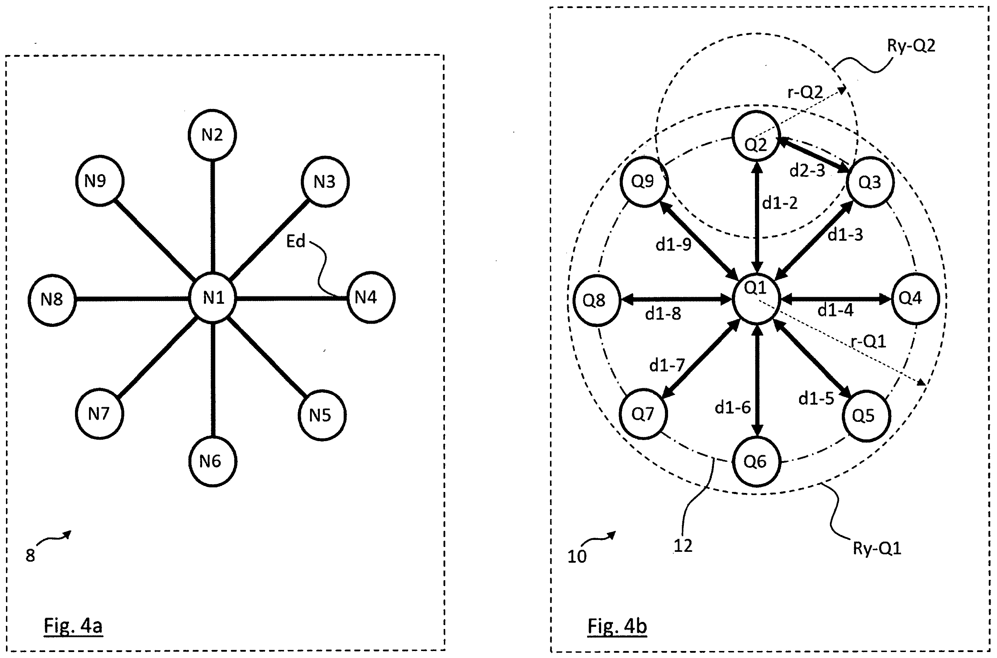

Figures 4a and 4b show another example of using different EM radiation on different qubit atoms to be able to encode a graph without using ancillary qubit atoms as shown in figure 2b. In the example of figures 4a/4b, figure 4a shows a graph 8 comprising nine nodes N1, N2, N3, N4, N5, N6, N7, N8, N9 and eight edges Ed (only one edge is labelled in this figure). The graph 8 is similar to the graph of figure 2a. The qubit atom register 10 used to encode the graph 8 is shown in figure 4b and comprises nine qubits atoms wherein: N1 is represented by Q1; N2 is represented by Q2, and the distance between Q1 and Q2 is d1-2; N3 is represented by Q3, and the distance between Q1 and Q3 is d1-3; N4 is represented by Q4, and the distance between Q1 and Q4 is d1-4; N5 is represented by Q5, and the distance between Q1 and Q5 is d1-5; N6 is represented by Q6, and the distance between Q1 and Q6 is d1-6; N7 is represented by Q7, and the distance between Q1 and Q7 is d1-7; N8 is represented by Q8, and the distance between Q1 and Q8 is d1-8; N9 is represented by Q9, and the distance between Q1 and Q9 is d1-9.

The geometrical layout of the graph 8 is directly represented by the qubit atom configuration 10 in figure 4b. In other words: the graph 8 is a geometric graph and locates all nodes on the same Euclidean plane, whilst correspondingly the qubit atom register 10 also locates all atoms on the same Euclidean plane; the length of each edge Ed from node N1 to the peripheral nodes N2-N9 are the same, whilst correspondingly the distances d1-X (where X is any of 2-9) between central qubit Q1 and peripheral qubits are the same; the distances between a peripheral node (N2-N9) and its two nearest neighbour peripheral nodes (N2-N9) are the same, whilst correspondingly the distances between the equivalent qubits Q2-Q9 are also the same.

Unlike the solution of the prior art in figure 2b which uses ancillary qubit atoms, for example ancillary qubit atoms Bi', Bii' to effectively edge-connect A' to B', the present application is able to use the same number of qubit atoms as nodes in the graph 8. The present application in this example, is able to correctly encode the graph by directing first EM radiation of a first amplitude onto central 'hub' qubit atom Q1 whilst second EM radiation of a second amplitude is directed on the peripheral 'spoke' qubits atoms Q2-Q9. The first amplitude is a different amplitude to the second amplitude. The first and second EM radiation in this example comprise the same central wavelength, however other implementations may use different wavelengths.

The first amplitude allows, upon absorption of the first EM radiation, for the qubit atom Q1 to be excited to a Rydberg energy level to give a blockade radius of r-Q1 defining a region Ry-Q1 that encompasses all peripheral qubit atoms Q2-Q9. The second amplitude allows, upon absorption of the second EM radiation, for any of the qubit atoms Q2-Q9 to be excited to a Rydberg energy level to give a blockade radius that does not blockade any other of the peripheral qubit atoms. In figure 4b, the blockade radius r-Q2 and corresponding circular blockade region Ry-Q2 is only shown for qubit atom Q2, however it is to be understood that other peripheral qubit atoms Q3-Q9 have similar potential blockade radii and regions.

Using the effective blockade radius of equation 3, above, one can see that the average of the blockade radii between any two peripheral qubit atoms Q2-Q9 is smaller than the distance between them, therefore the promotion of a peripheral qubit atom Q2-Q9 to the Rydberg energy level will not blockade the same promotion of another of the peripheral qubits.

Conversely, one can see that the average of the blockade radii between the central qubit atom Q1 and any one of the peripheral qubit atoms Q2-Q9 is larger than the distance between them. Therefore, the promotion of the central qubit atom Q1 to the Rydberg energy level will block the Rydberg energy level promotion of all the peripheral qubit atoms Q2-Q9. One can further see that because of the pair-wise dependency of the effective Rydberg blockade, the promotion of a peripheral qubit atom Q2-Q9 will block the Rydberg transition of qubit atom Q1. In other words, if at least one peripheral atom Q2-Q9 gets promoted to the Rydberg energy level, it will block the Q1 atom's Rydberg promotion, thus allowing all other peripheral atoms Q2-Q9 to also be promoted to the Rydberg energy level. Although this example is described with all of Q1-Q9 residing on the same plane, the atoms may not need to reside on the same plane. For example, Q1 may reside off the plane that Q2-Q9 are residing upon but is excited to a Rydberg energy level still encompassing all of Q2-Q9.

Using exemplary distance numbers into the example of figure 4b, take d1-X as distance '1'. In this numerical implementation atom-atom distances are in arbitrary units. Each triangular segment made up of Q1 and two adjacent peripheral nodes (for example Q2 and Q3) has an angle subtending about Q1 (between d1-2 and d1-3) of 45 degrees. Given that D1-2 and d1-3 are equal at the value '1', the segment is an isosceles triangle, making the shortest, direct distance between Q2 and Q3 = 2 x cos 67.5 = 0.765. Thus, in order for Q1 to Rydberg-block a peripheral atom Q2-Q9; and a peripheral atom to block Q1 but not another peripheral atom: r-Q2 need to be less than 0.765 and r-Q1 needs to be large enough such that $R_{eff}$ from equation 3 is greater than 1. This can be achieved by setting r-Q2 to 0.7 and r-Q1 = 1.35. Doing this means that $R_{eff}$ for a peripheral atom pair is ~ ((0.7+0.7)/2) ~ 0.7, which is less than the physical distance between them of 0.765, entailing that no edge is encoded between the peripheral atoms Q2-Q9. Conversely, $R_{eff}$ for the central atom Q1 and any one peripheral atom is ~ ((0.7+1.35)/2) ~ 1.025, which is more than the physical distance between them of 1, entailing that an edge is encoded between the central atom Q1 and the peripheral atom.

Using EM radiation in this manner automatically encodes independent sets in that when the first and second EM radiation is applied as discussed for figure 4b, the qubit atoms that will be in the Rydberg energy level may be any of the following measured outcomes:

A) Q1 at the Rydberg energy level and none of the peripheral atoms Q2-Q9 being at the Rydberg energy level.

B) All peripheral atoms Q2-Q9 at the Rydberg energy level and atom Q1 not being at the Rydberg energy level.

C) A subset of one or more the peripheral atoms Q2-Q9 being at the Rydberg energy level; atom Q1 not being at the Rydberg energy level and at least one of the peripheral atoms Q2-Q9 not being at the Rydberg energy level.

Running the same quantum computation multiple times would normally yield the above results A, B, C. Results A) and B) are equivalent because they both show a maximal independent set to be all of the peripheral atoms Q2-Q9, hence all nodes N2-N9. The other node combinations in results C would be disregarded as non-optimum results for MIS.

Turning back to the example of figure 3d, certain steps are performed either by a user and/or a classical electronic computer (or 'classical computer'). The following considerations may be used for any example herein. Any of the examples described herein may use some, all or none of these steps involving a classical computer. Examples of a classical computer are described elsewhere herein. In general, the classical computer performs operations on bits during the computation rather than using qubits. The classical computer may comprise different modules, implemented in hardware and/or software, that perform the different classical computer steps described herein. Where one module interacts with another module by outputting data to the other module, or otherwise when the classical computer outputs instructions to other equipment, one or more electric signals comprising the data are transmitted using wired or wireless communication techniques to the intended destination.

A user and/or a classical electronic computer may determine the node positions and required edges in the graph 2. Alternatively, data defining the graph may be provided from an external source. Similarly, a user and/or a classical electronic computer may determine the problem to be solved for the graph 2. Alternatively, data defining the problem may be provided from an external source. A user and/or a classical electronic computer may determine the node positions and required edges in the graph 2. Data comprising graph information and the graph problem may be output to a further module for determining the set-up and/or running of the quantum computation. The graph and graph problem data may optionally be stored in a data storage device.

A user and/or a classical electronic computer may receive the graph and graph problem data and use the data to determine the set-up and/or running of the quantum computation. This may involve determining a Hamiltonian for encoding the graph and associated problem and determining qubit atom positions and EM radiation from the Hamiltonian. This determination may include calculating: one or more data values comprising node position data; and/or, EM amplitude values and/or wavelength values for one or more EM beams input to the qubit atoms during the quantum computation. The amplitude and wavelength values may be time dependent, for example the amplitude and or wavelength may change over time during the duration of the quantum computation. This process may be calculated using the same or a different module of the classical computer. Alternatively, data detailing any one or more of: the qubit-atom positions; EM amplitude and EM wavelength data may be provided from an external source. The classical computer may output the qubit atom position data to a system for trapping qubit atoms, for creating optical traps and locating the qubit atoms in the traps. Furthermore, the classical computer may output the qubit atom position data to a system for generating the EM radiation for performing the quantum computation, hence providing the EM radiation for exciting atoms to the Rydberg state. The system for generating EM radiation may include one or more EM radiation sources and modulator apparatus, that together provide at least two beams of EM radiation that can be input to the qubit atoms during the quantum computation. Preferably at least two of the EM beams comprise different amplitudes. Preferably, during the quantum computation, at least one EM beam is directed at a set of one or more qubit atoms whilst at least another EM is directed to a further different set of one or more of the qubit atoms that are different to the other set. Each EM radiation source and optionally any other component of the system for generating EM radiation may be controlled by a controller that in turn receives data signals from the classical computer.

In the example of figure 3d, four separate lasers are used to generate EM radiation, although in other implementations one EM radiation source, such as an LED or laser or VCSEL may be used to generate EM radiation for inputting to the qubit atoms during the quantum computation. For the example in figure 3d, a first laser generates EM radiation (or 'first laser light') for qubit atoms QG, QB, QD, QE.

For this example and any other example presented by the application herein, the EM radiation used to excite qubit atoms between different energy levels may be a set of one or more different EM radiation. The two or more different EM radiation may be used to excite the qubit atoms via a multiphoton resonant transition such as a two-photon resonance transition. The 'set' may therefore comprise EM radiation of different wavelengths. For example, one or more, preferably all, of the qubit atoms may be provided EM radiation of a first wavelength and a second wavelength. The first wavelength may be applied to all of the qubit atoms, for example as a global addressing beam. The EM radiation of the first wavelength may comprise a common amplitude that is input to all, or at least a plurality of the qubit atoms. Each qubit atom may be provided a second wavelength wherein the amplitude of the EM radiation of the second wavelength may be different for different qubit atoms. The different amplitudes of the second wavelength enable different qubits to have different energy level excitations. Examples of wavelengths used in a two-photon transition at 420nm and 1013nm, wherein either or the 420 or 1013 nm EM radiation may be used as a global addressing beam. Other wavelengths may be used.

The laser light is sent to an amplitude modulator to globally control the amplitude of the first laser light. The laser light is then amplitude split with beam splitters into four spatially separate beams of equal amplitude. This may be accomplished by outputting the laser light from the global amplitude modulator to a first beam splitter to amplitude divide the incoming laser light into two spatially separate beams, each having 50% of the incoming laser light. Then, each of these two beams is input into a respective different second beam splitter to further divide the incoming laser light into two spatially separate beams, each having an amplitude of 25% of the original laser light output from the global modulator (subject to propagation and device insertion losses). Each separate beam is then directed to a different one of QG, QB, QD, QE using the same or a respective different imaging optical system. Optionally, each of the four separate beams is passed through a further separate amplitude modulator for locally controlling the amplitude of the EM radiation into to a respective one of QG, QB, QD, QE during the quantum computation. A second laser generates EM radiation for qubit atom QA and may have a similar set of components for directing and controlling EM radiation as for the first laser. The second laser may input its light into an amplitude modulator to control the amplitude of the light input to atom QA. The same or a different optical system may be used to direct and focus the second laser light onto qubit atom QA. A third laser generates EM radiation for qubit atom QC and may have a similar set of components for deliver EM radiation to atom QA, for example a modulator and an optical system. A fourth laser generates EM radiation for qubit atom QF and may have a similar set of components for deliver EM radiation to QA, for example a modulator and an optical system.

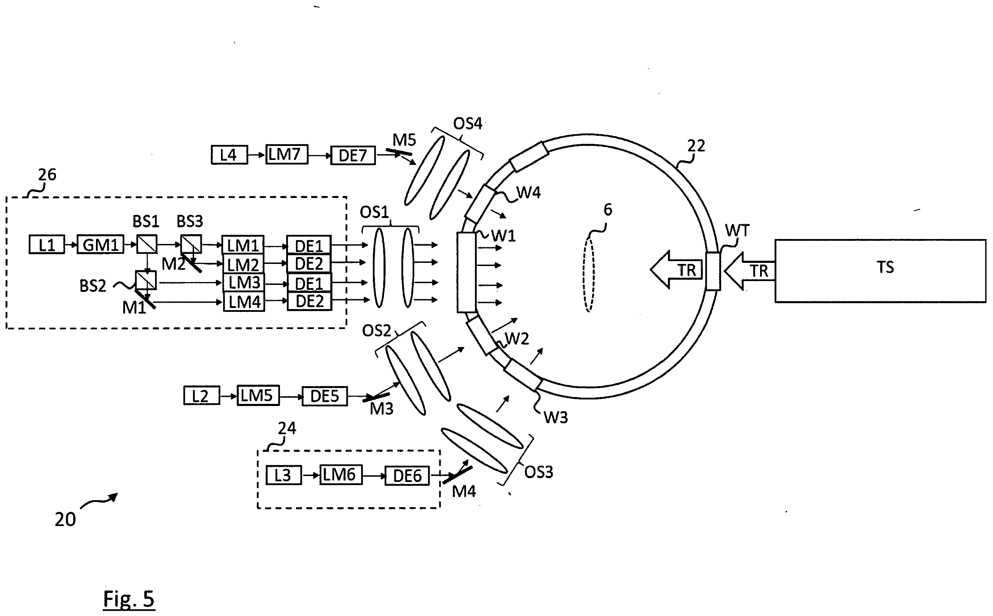

Figure 5 shows a schematic of an example arrangement 20 for implementing the quantum computation of the qubit atom system 6 in figure 3d. A similar arrangement may be used for other examples herein. The atomic system 6 is held by optical trapping radiation TR in a vacuum chamber 22. The vacuum chamber 22 comprises a plurality of windows for allowing EM radiation to pass into/out-of the vacuum chamber 22. Trapping system TS is used to generate the optical trapping beams that are output from the system and directed to the atomic system 6 via one of the windows WT of the vacuum chamber 22. Any type of optical trapping technology may be used. It should also be appreciated that, as a schematic, values, distances and sizes in the figure are not representative of actual real world implementation values.

The first laser L1 outputs light into the global amplitude modulator GM1, which is controlled by an electronic controller to vary the light amplitude output by the modulator GM1. Light output from GM1 is input into first 50/50 amplitude beam splitter BS1. Substantially 50% of the input light is reflected at 90 degrees and output through the beam splitter BS1 and input into second beams splitter BS2. The remaining light input to BS1 is output through the beam splitter BS1 and input into third beam splitter BS3. Both BS2 and BS3 reflect 50% of the received light. BS2 reflects light onto local amplitude modulators LM3. BS3 reflect 50% of the received light, via mirror M2 onto LM2 respectively. BS2 transmits the remaining portion of the received light onto mirror M1 which in turn directs the reflected light into local amplitude modulators LM4. BS3 transmits the remaining portion of the received light onto local amplitude modulators LM1.

Local amplitude modulators LM1-4 are controlled by one or more electronic controllers (not shown) to controllably change the optical amplitudes of the four different, spatially separate, EM beams output respectively from LM1-4. In this example the output amplitudes of LM1-4 are controlled such that, respectively, the same light amplitudes are incident at the same time on qubit atoms QB, QD, QE and QG. The output EM beams from LM1-4 are input into respective optical deflectors DE1-DE4, which control the direction of the light that is input to the optical system OS1 that receives the light from each of DE1-4. Each deflector DE1-4 receiving a different one of the light beams output from the amplitude modulators LM1-4 and associated with a different one of qubit atoms QG, QB, QD, QE. Each of the deflectors DE1-4 controls the incident angle of the beam into the optical system, for a different one particular qubit atom QG, QB, QD, QE. By controlling the incident angle, hence direction of the beam, each deflector DE1-4 can steer the beam to be incident upon the desired qubit QG, QB, QD, QE. The optical system OS1 focusses the EM radiation from each beam output from the deflectors DE1-4 through a vacuum chamber window W1.

The second laser L2 outputs light into the amplitude modulator LM5, which is controlled by an electronic controller to vary the light amplitude output by the modulator LM5. Deflector DE5 receives light from LM5 and works in a similar manner to other deflectors described above. Optical system OS2 receives light output from deflector DE5 that has been reflected off a mirror M3. Optical system OS2 works in a similar manner to optical system OS1 and uses window W2 to pass light into the vacuum chamber 22 and onto qubit atom QA.

The third laser L3 outputs light into the amplitude modulator LM6, which is controlled by an electronic controller to vary the light amplitude output by the modulator LM6. Deflector DE6 receives light from LM6 and works in a similar manner to other deflectors described above. Optical system OS3 receives light output from deflector DE6 that has been reflected off a mirror M4. Optical system OS3 works in a similar manner to optical system OS1 and uses window W3 to pass light into the vacuum chamber 22 and onto qubit atom QC.

The fourth laser L4 outputs light into the amplitude modulator LM7, which is controlled by an electronic controller to vary the light amplitude output by the modulator LM7. Deflector DE7 receives light from LM7 and works in a similar manner to other deflectors described above. Optical system OS4 receives light output from deflector DE7 that has been reflected off a mirror M5. Optical system OS4 works in a similar manner to optical system OS1 and uses window W4 to pass light into the vacuum chamber 22 and onto qubit atom QF.

In alternative implementations of the above arrangement 20, any one or more of the following may occur: any of the deflectors may be removed, for example if the positions of the components for generating, directing and manipulating the beams may give rise to the correct positioning of the beam in the vacuum chamber 22; any of the local amplitude modulators LM1-7 may be removed because the amplitudes may not require further control and/or the amplitudes may be controlled with other components such as directly modulating a laser source L1-4. The lasers may be replaced by other sources such as VCSELs (Vertical Cavity Light Emitting Diodes) or LED's; mirrors M1-M4 may not be required if components are oriented in manners to direct radiation in the required direction of light output by the mirror, and/or one or more optical fibres may be used to direct WM radiation to the optical systems OS1-4; beam splitters BS1-3 may be replaced by integrated optic or fibre-optic amplitude splitting components; certain components of the arrangement 20 may reside within the vacuum chamber 22; light originating from different laser beams, for example L1 and L4, may use the same vacuum chamber window; global modulator GM1 may be removed; each of the qubit atoms in the system of qubit atoms 6 may have EM radiation originating from a respective different source, or alternatively each of the qubit atoms in the system 6 may have EM radiation input to it during the computation from light originating from a common source; for example L1 may direct light to all local modulators LM1-7 and thus sources L2, L3, L4 are not required.

The above discussed examples of figures 3a/3d and 4a/4b are examples of the methods and systems for solving graph problems on a NAQC. In general, a plurality of atoms are used for representing qubits for a neutral atom quantum computation. The neutral atom quantum computation is for finding one or more solutions to a problem represented by a graph. The graph comprising a plurality of nodes. A first atom of the plurality of atoms represents a first node of the plurality of nodes. A second atom of the plurality of atoms represents a second node of the plurality of nodes that is different to the first node. The first atom being a different atom to the second atom.

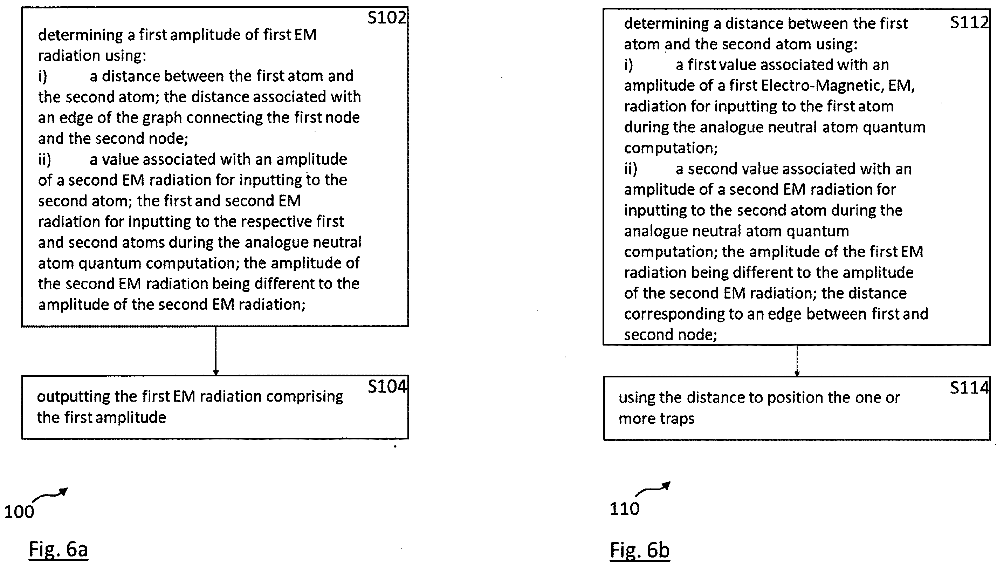

Figure 6a shows an example of a method 100 for outputting Electro-Magnetic, EM, radiation for the NAQC computation. In this method an amplitude of a first EM radiation is determined. The first EM radiation is for inputting to a first atom of the qubit atoms in the quantum computation. The EM radiation may be output as part of a set of outputs including other EM radiation. The different EM radiation may be output simultaneously. The EM radiation may be output once other factors have been determined and actions implemented, including, but not limited to any of: determining qubit atom positions; generating optical traps at trapping sites for holding the qubit atoms; positioning the qubit atoms in the trapping sites.

The method comprises steps S102 and S104 which are discussed underneath. Each of these steps may be modified. Step S102 determines a first amplitude of the first EM radiation. This determination is made, preferably using a classical computer processor. The determination is made using a distance between the first atom and the second atom wherein the presence or absence of an edge of the graph connecting the first node and the second node. The determination is made using a value associated with an amplitude of a second EM radiation for inputting to the second atom. The first and second EM radiation are for inputting to the respective first and second atoms during the analogue neutral atom quantum computation. The amplitude of the second EM radiation is different to the amplitude of the second EM radiation. At step S104, the method outputs the first EM radiation comprising the first amplitude. Step S104 is preferably executed by an EM source, or an EM source system as described underneath.

Step S104 may be replaced by a step (not shown in the figure) of outputting an electronic control signal for outputting the first EM radiation. Such a further step may also be included in between steps S102 and S104. Such a signal comprises data for inputting to an EM source system for outputting EM radiation for the first atom. The EM source system may be any arrangement of components for generating and amplitude and/or wavelength controlling the EM radiation. For example, the output signal may be input to an electronic controller for controlling the physical properties of the EM radiation. Such a controller may be one described with respect to figure 5 and the EM source system may be a set of components are shown in figure 5. For example, an EM source system may include any of, but not limited to: an EM source; one or more amplitude modulators. An example of an EM source system is a system comprising components for outputting a single beam of EM radiation for a single atom, such as system 24 in figure 5, which comprises laser L3, amplitude modulator LM6 and beam deflector DE6. Another example of an EM source system is a system comprising components for outputting a multiple beams of EM radiation for multiple atoms, such as system 26 in figure 5, which comprises (but is not limited to) laser L1, amplitude modulator GM1, amplitude modulators LM1-4 and beam deflectors DE1-4. Any of these example systems may have further components or may not have the components exemplified, for example the EM source system may just have an EM source, and optionally have: a) an amplitude modulator; and b) a beam deflector; c) other components. Thus, the output signal may, in some implementations, only be sent to an EM source wherein the signal dictates the output amplitude level of EM radiation. In other implementations the output signal may be sent to one or more amplitude modulators such as LM6, LM1-4 or GM1, to control the output EM radiation amplitude incident upon the atom or atoms that EM radiation is input to during the quantum computation.

Method 100 is now discussed with respect to the example in figures 4a/4b. This example is used to demonstrate the operation of method 100 and should not be interpreted as limiting the method 100 to this particular use. In particular any teachings underneath for this example may be applied to other examples herein. The first EM radiation may be the EM radiation directed at qubit atom Q1. The 'first atom' in step S102 is therefore qubit atom Q1. The outputting of the first EM radiation in step S104 may be executed by an EM source system similar to system 24 in figure 5. The second EM radiation may be the EM radiation directed at qubit atoms Q2-Q9 in figure 4b. The 'second atom' may therefore be qubit atom Q2.

The distance between atom Q1 and Q2 may be derived in different ways. A first optional way is that the distance is manually calculated by a user or calculated by a classical computer. This calculation may form part of deriving a Hamiltonian for encoding the graph and its associated problem. Another optional way is that the distance is determined by making a measurement on the positions of the atoms once they are trapped, for example by taking an image of the fluorescence of the atoms.

The value associated with the amplitude of the second EM radiation may be the known or estimated amplitude of the second EM radiation determined by measurement. For example, an optical power monitor may be used to determine the amplitude of EM radiation incident upon the second atom. Additionally, or alternatively, the value may be determined using a calculation that determines the intended amplitude of the second EM radiation. This may be manually calculated by a user or calculated by a classical computer. This calculation may form part of deriving a Hamiltonian for encoding the graph and its associated problem. The 'value' may be the EM amplitude or another amplitude-related value such, as a Rabi frequency, that depends on the amplitude.

Given the distance and second amplitude value, the classical computer determines what the amplitude of the EM radiation needs to be to ensure that qubit atoms Q1 and Q2 are able to Rydberg-blockade each other during the quantum computation when both first and second EM radiation is input to qubit atoms Q1 and Q2 respectively. Details of how this is determined is included elsewhere herein and may use other data such as: data for the type of atom, wavelength of the first and second EM radiation. In this discussion of method 100 applying to figures 4a/4b, the second EM radiation is always input simultaneously to qubit atoms Q3-Q9. As a result of determining the amplitude of the first EM radiation, different actions may entail. For example, the EM radiation source for the first radiation may be initially set too high or too low. As a result of the determination of the first amplitude, an electronic control signal may be sent to change the DC bias of the EM source, hence changing output amplitude. Additionally, or alternatively, the same or similar signal may be sent to an amplitude modulator to change the EM radiation amplitude output from the modulator, upon receiving the EM radiation.

Figure 6b shows a further example method 110 for use with a the NAQC computation. This method and other methods described herein may be adapted to remove features, change features or add features from other examples herein. This method is for positioning one or more traps of a plurality of traps. The traps are optical traps in this example. The plurality of traps are for holding a plurality of atoms. Preferably each trap holds upto one atom. A plurality of traps may be generated and either all of the traps are occupied by an atom, or a subset of the traps are each occupied by an atom. In some implementations, traps may be turned off during a quantum computation, for example when a further EM radiation beam is used to excite the one or more qubit atoms in the trap to a higher energy level such as a Rydberg energy level. In such a case, the EM radiation for the trap is typically temporarily turned off whilst the other EM radiation is incident upon the atom(s) in the trap. Then, once the further radiation has stopped being input to the atom(s), the EM radiation for the trap is turned on again to re-trap the atom(s). Additionally, or alternatively, during a quantum computation, one or more of the traps may be maintained during a time period where further EM radiation from one or a plurality of other EM radiation sources are incident upon the same atom. The above considerations for using trapping EM radiation with other EM radiation for the quantum computations may be applied to other examples herein.

For the method of figure 6b, the plurality of atoms represent qubits in the neutral atom quantum computation. This computation may be an analogue quantum computation. The neutral atom quantum computation is for finding one or more solutions to a problem represented by a graph. The graph comprising a plurality of nodes. A first atom of the plurality of atoms represents a first node of the plurality of nodes. A second atom of the plurality of atoms represents a second node of the plurality of nodes that is different to the first node. The first atom being a different atom to the second atom. The first and second atoms are physically separate from each other but may be the same or a different type of atom, in other words the atoms can be the of the same element of a different element.

The method 110 comprising a first step S112 of determining a distance between the first atom and the second atom. This is achieved using a first value associated with an amplitude of a first Electro-Magnetic, EM, radiation for inputting to the first atom during the analogue neutral atom quantum computation. This is further achieved using a second value associated with an amplitude of a second EM radiation for inputting to the second atom during the analogue neutral atom quantum computation. The amplitude of the first EM radiation is different to the amplitude of the second EM radiation. The determined distance corresponds to the maximal distance between atoms within which would encode an edge between the first and second node. At step S114, the distance is used to position the one or more traps.

The positioning of the traps may be accomplished in different ways including outputting an electrical control signal to one or more other devices, such as EM sources and modulators, for controlling and generating optical traps. The method may further include outputting EM radiation as one or more EM beams input into a region comprising the qubit atoms. The generation of EM traps may be done in different ways including using a spatial light modulator (SLM). The SLM may comprise a plurality of phase modulator elements that receive input EM radiation and phase distort the wavefront such that when the output distorted wavefront is focussed into the region containing the qubit-atoms, and plurality of spatially separated EM spots are generated that act as optical traps.

Preferably the beams are focussed to respective beam waists at different spatial positions in the said region. The beam waists are a part of, or define, optical trapping regions. For example, the beam waist of a first beam forms a first optical trap for the first atom whilst the beam waist of a second beam forms a second optical trap for the second atom. A distance between the optical traps (for example the centre spot-centre spot distance) corresponds to the distance determined by the method 112.

Method 110 is now discussed with an example using figures 4a/4b. In this example, the method is provided with data detailing EM radiation that can be input to qubit atom Q1 and EM radiation that can be input to qubit atoms Q2-Q9. Such data may be, for example amplitude data, time dependent amplitude data, or other types of data. In this worked example, the EM source this is to be used for inputting EM radiation to Q1 during the quantum computation is a different EM source than the EM source for outputting EM radiation for atoms Q2-Q9.

The equipment, for this particular example, used to provide EM radiation to qubit atoms Q2-Q9, for purposes of exciting the qubit atoms to energy levels needed in the quantum computation, has a maximum optical intensity. Such limitations may arise from any of, but not limited to: the output power of the EM source(s) used to generate such EM radiation, optical power losses between the EM source(s) and the qubit atoms. The maximum intensity per qubit atom is used to derive the maximum optical amplitude input per peripheral qubit atom Q2-Q9 during a forthcoming quantum computation and hence the Rabi frequency for the atoms Q2-Q9 when provided this EM radiation. Using equation 1, this Rabi frequency is used to calculate the Rydberg blockade radius for each of the peripheral qubit atoms Q2-Q9. This radius is then used to determine the minimum distance each qubit atom Q2-Q9 needs to be away from adjacent neighbouring peripheral qubit atoms Q2-Q9 so to not give rise to a Rydberg blockade between the two atoms. For instance, a minimum distance of r-Q2 is calculated such that the excitation to the Rydberg state of Q2 will not, or not likely, blockade the excitation of Q9 or Q3.

Given that the spatial arrangement of qubits atoms Q1-Q9 in the vacuum chamber is desired to represent the geometric positioning of the nodes N1-N9 of graph 8, a circle 12 centred about the qubit atom Q1 is calculated upon which equally spaced peripheral qubit atoms Q2-Q9 can be located without Rydberg blockading each other. This circle 12 around atom Q1 is a circle of minimum radius and other larger radii may be used. How far away each peripheral qubit atom Q2-Q9 is from central qubit atom Q1 is then determined. Equation 3 is firstly used to determine the minimum distance neighbouring peripheral qubit atoms should be spaced from each other wherein 'u' and 'v' are two adjacent peripheral atoms and the distance between the atoms should be greater than the determined $R_{eff}$. In figure 4b, this may be the distance 'd2-3'. By geometry, this allows for the determination of the minimum distance d1-2. Correspondingly, because of the symmetry of the geometric layout: the minimum determined distance of d2-3 is the same as other distances between adjacent peripheral atoms; and the minimum determined distance d1-2 is the same as other distances d1-X (where X=3-9) between Q1 and any one of the peripheral atoms Q3-Q9.

Information about the EM radiation input to Q1 is then used to determine the distance d1-2 needs to be in order to induce a Rydberg blockade between Q1 and Q2. For example, the EM radiation input to Q1 may be of a fixed value, or a fixed range. In such a situation, equation 3 is then used again (with 'u' and 'v' referring to Q1 and Q2) to determine the value of d1-2 that uses a permitted input optical amplitude for Q1 such that d1-2 is less than $R_{eff}$ for the Q1-Q2 pair, but still allows for d2-3 to be larger than $R_{eff}$ for the qubit pair Q2-Q3.

These distances are then used to position the optical traps, for example the data with these distances is input as a control signal into equipment of generating the optical traps. Additionally, or alternatively, the distance data is input into a calculation for determining a Hamiltonian for encoding the graph 8 into the quantum computation with the qubit atoms 10.

The above processes for graph generation and NAQC computations may be used by any example herein.

The method, apparatus and systems described herein may be used for different graph problems including any of, but not limited to, maximum independent set (MIS). Other graph problems may be solved including MaxCut. Furthermore, the edges and/or nodes of the graphs may be unweighted or weighted. The unweighted version of those graph problems may be seen as special cases of the weighted version, where all weights are set to the same value (e.g., 1). The solving of the graph problem may be to find the set of edges or nodes that gives the largest sum of weights.

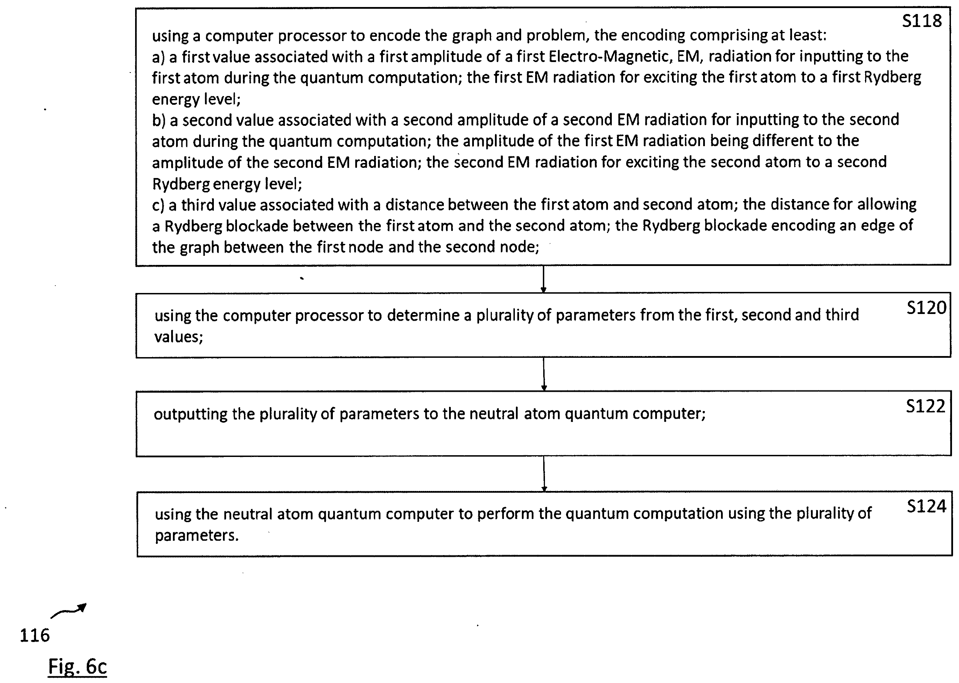

Figure 6c shows a further example of a method 116. Any of the method steps may be removed or adapted. Furthermore, features of this method, for example any of the steps and devices used, may be used with other methods herein including but not limited to the methods of figures 6a and 6b. The method 116 is for performing a quantum computation using a neutral atom quantum computer. The neutral atom quantum computer comprises a plurality of atoms for representing qubits for the quantum computation. The quantum computation is for finding one or more solutions to a problem. The problem is applied to data represented by a plurality of nodes of a graph. A first atom of the plurality of atoms represents a first node of the plurality of nodes. A second atom of the plurality of atoms represents a second node of the plurality of nodes that is different to the first node; the first atom being a different atom to the second atom.

The method 116 comprises, at step S118, using a computer processor to encode the graph and problem. The encoding comprising at least: a) a first value associated with a first amplitude of a first Electro-Magnetic, EM, radiation for inputting to the first atom during the quantum computation; the first EM radiation for exciting the first atom to a first Rydberg energy level; b) a second value associated with a second amplitude of a second EM radiation for inputting to the second atom during the quantum computation; the amplitude of the first EM radiation being different to the amplitude of the second EM radiation; the second EM radiation for exciting the second atom to a second Rydberg energy level; c) a third value associated with a distance between the first atom and second atom; the distance for allowing a Rydberg blockade between the first atom and the second atom; the Rydberg blockade encoding an edge of the graph between the first node and the second node.

The method 116 comprises, at step S120, using the computer processor to determine a plurality of parameters from the first, second and third values.

The method 116 comprises, at step S122, outputting the plurality of parameters to the neutral atom quantum computer.

The method 116 comprises, at step S124, using the neutral atom quantum computer to perform the quantum computation using the plurality of parameters.

The following discussion provides further discussion on the theoretical basis of running of the quantum computation and some of the optional considerations of determining a Rydberg blockade for multiple atoms. Any of the details of the following discussions may be utilised in any of the examples provided herein.

The Rydberg blockade effect may be described such that the presence of an atom in a Rydberg state prevents other nearby atoms from being driven into the Rydberg state by shifting the energy of the multiple-excited state. This effect enables entangling gates for digital quantum computation. It further affects the interaction term of Rydberg analog quantum computation Hamiltonian operators.

The Rydberg blockade mechanism can be understood via an energy level picture in the z basis, with basis states ground $|g\rangle = |0\rangle$ and Rydberg $|r\rangle = |1\rangle$. In this configuration of a neutral atom system, the Hamiltonian may be described as that of a Transverse Field Ising Model which, with $\hbar = 1$, is written as 'H' is equation 4.

$$H = \frac{1}{2}\Omega \sum_i \sigma_i^x - \delta \sum_i n_i + \sum_{i \neq j} \frac{C_6}{r_{ij}^6} n_i n_j$$

.                                                        [Equ. 4]

where $r_{ij}$ is the distance between atoms i and j, $n_i = (1 - \sigma_i^z)/2 = |r\rangle\langle r|$ is the Rydberg state occupancy of atom i, $\Omega(t)$ and $\delta(t)$ are the amplitude and detuning of a laser driving the transition between $|g\rangle$ and $|r\rangle$, and $C_6$ is the van der Waals coefficient which is a constant depending on the Rydberg level targeted.

Atoms experience a large electric dipole moment when in the Rydberg state, which produces dipole-dipole interactions with van der Waals character at the separations and principle quantum numbers which we consider. For a pair of atoms, the energy of the doubly excited state $|rr\rangle$ is significantly shifted, such that a laser resonant with the $|g\rangle \leftrightarrow |r\rangle$ transition of both atoms individually will no longer be resonant with $|rg\rangle \leftrightarrow |rr\rangle$ or $|gr\rangle \leftrightarrow |rr\rangle$ and so cannot drive transitions to $|rr\rangle$. Thus, in the dynamics of the system, the potential excitation of one atom is conditioned on the state of the other. The energy shift of $|rr\rangle$ can be well approximated by the van der Waals interaction, $C_6/r_{ij}^6$, as seen in the last term of Equation 4. From this, one can infer that two atoms are blockaded when $\Omega + \delta \ll C_6/r_{ij}^6$, since the energy of the driving laser is not enough to populate $|rr\rangle$ from an initial state $|gg\rangle$ (or $|gr\rangle$ or $|rg\rangle$), and conversely non-blockaded when $\Omega + \delta \gg C_6/r_{ij}^6$.

This understanding is used to infer the distance between atoms i and j within which only one of these atoms may be excited. This distance is generally termed as the "blockade radius" which may be and is written in an alternative form to equation 1, as equation 5:

$$R_b = \left(\frac{C_6}{\Omega + \delta}\right)^{-1/6}$$

[Equ. 5]

It can be instructive to use such a definition to determine the potential connectivity of an array of Rydberg atoms for use in digital quantum computation, with the blockade radius determining the maximum radius of connectivity for each atom. However, this expression does not capture the behaviour beyond the binary which we expect around $r_{ij} \approx R_b$, and it does not extend to local amplitude, detuning or the concept of simultaneous versus sequential driving, as is present in analog quantum computation.

The inventors herein define a way to quantify blockade to better describe the transition from the blockaded regime to the non-blockaded one. A quantity for this is the maximum occupation of the doubly-excited state $P_{rr} = \max_t |\langle \psi(t)|rr\rangle|^2 \in [0, 1]$.

For a system driven over a sufficiently long duration, we may expect $P_{rr}$ to approach a value of 1 if the atoms are very far apart and the system is free to explore all energetically allowed states. If, on the other hand, the atoms are blockaded to some extent, we may expect the value of $P_{rr}$ to be bounded above by a quantity related to the extent of the blockade. As such, we may quantify blockade as $1 - P_{rr}$. With this quantifier for blockade we can define the blockade radius to be the distance at which $P_{rr} = 0.5$.

In order to characterise the blockade mechanism, its behaviour as a function of atom separation was investigated, for several different atom pair systems. In particular, the inventors chose to study three systems of increasing complexity: a sequentially driven system and two simultaneously driven systems, with global and local amplitudes.

In the sequentially driven system one atom is excited to the Rydberg state with the use of a $\pi$-pulse, and then the second atom is driven separately. In this scenario the resulting Hilbert space is only that of the second atom (i.e. 2 dimensional) but characterisation of the blockade mechanism serves to introduce the concepts effectively and lays the groundwork for the study of the two other, less simple, systems.

In the simultaneously driven systems both atoms are initially in the ground state and driven simultaneously, either with global amplitude and detuning, or where these values differ between the atoms. The resulting four-dimensional Hilbert spaces are harder to treat exactly but the results may have implications for the behaviour of many body systems of Rydberg atoms, for example for analog quantum computing.

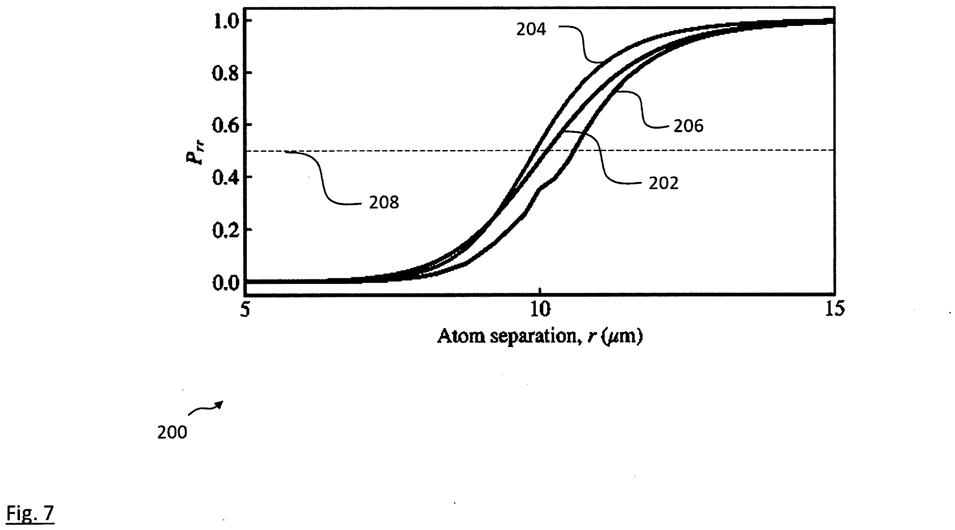

Figure 7 shows a graphical plot 200 of the value of $P_{rr}$ on the Y axis as a function of atom separation in $\mu$m of the X axis, for all three systems, with the same average value of $\Omega$ and with $\delta = 0$. The sequentially driven 202 and global simultaneously driven 204 system values were found using the analytic expressions described later in Equation 6. The local system values 206 were obtained through simulation, hence the presence of noise. We note that all three systems exhibit similar but not identical be-haviour and so can be expected to have different behaviour of the blockade radius. Figure 7 represents maximum occupation of the doubly-excited state during a 15$\mu$s pulse with respect to atom separation for the sequential 202, global simultaneous 204 and local simultaneous systems 206 with no detuning. For the sequential and global systems, $\Omega = 5$, for the local system $\Omega_0 = 2.5$ and $\Omega_1 = 7.5$. Results for this system were found through simulation. The horizontal dashed line 208 indicates $P_{rr} = 0.5$, the value used to determine the blockade radius of each system.

We now discuss the case for the sequential system.

We obtain a functional form for the double-excitation probability by diagonalising the effective 2-level system, solving the time-dependent Schrodinger equation of the system to find the occupation of the doubly-excited state and differentiating this with respect to time to find the maximum value over all time, as per equation 6:

$$P_{rr}^{\pi}(r) = \frac{1}{1 + \left[\frac{1}{\Omega} \times \left(\frac{C_6}{r^6} - \delta\right)\right]^2}$$

[Equ. 6]

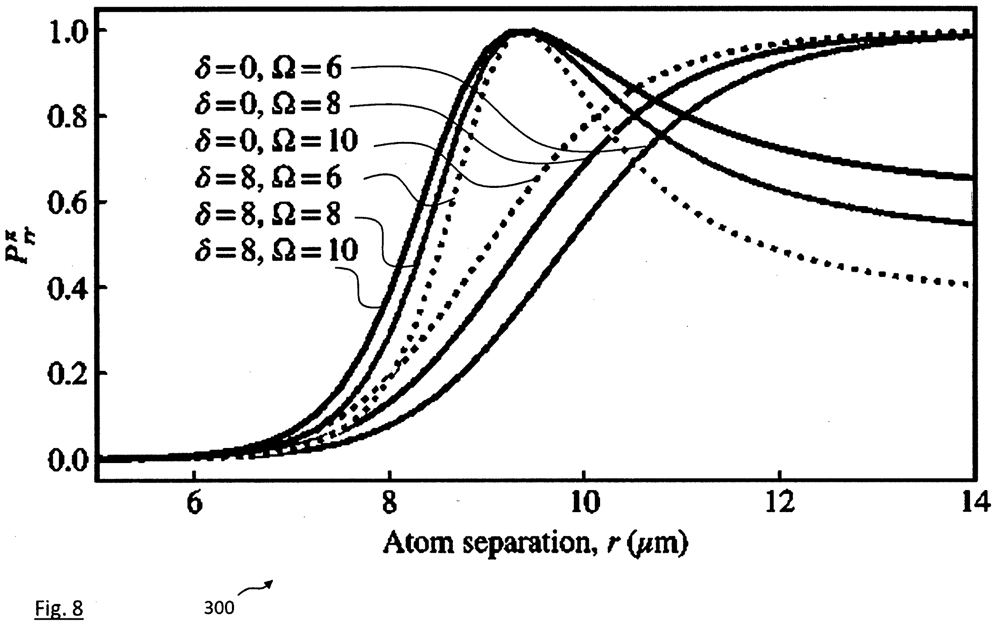

where $P_{rr}^{\pi}$ is used to denote the maximum value of the double-excitation probability over all time in the sequentially driven system. We use $r$ to denote $r_{ij}$ when only two atoms are present. The original definition of the blockade radius from Equ. 5 is recovered for $P_{rr}^{\pi}(R_b) = 0.5$, such that $R_b^{\pi} = R_b$. This result, alongside values extracted from simulation, is shown in Figure 8 for different values of

amplitude $\Omega$ and detuning $\delta$. Figure 8 shows a plot 300 of maximum occupation of the doubly-excited state with respect to atom separation for a sequentially driven system during a 15μs pulse, compared to the analytic values found in Equ. 6 for the maximum over all time. Figure 8 therefore shows that the presence of detuning serves to shift down the separation between atoms at which the laser is effectively resonant with the transition to the double excited state, while increasing $\Omega$ serves to broaden the width of the peak.

We now discuss the case for the global simultaneous system.

We can diagonalise the Hamiltonian of the two-atom globally driven system with minimal approximation, from which we can obtain the occupation of the doubly-excited state. Although directly differentiating the resulting expression was not achievable, an analytical expression was obtained for the full analytic solution for $P_{rr}$, for any given r, $\Omega$ and $\delta$.

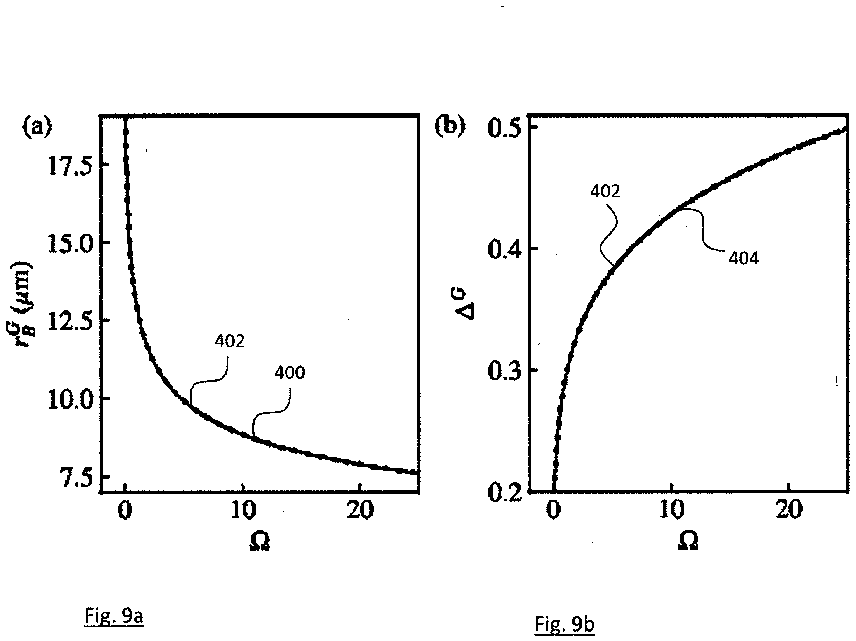

Using this analytic expression, we find numerically that $R^G_b$ (i.e. $R_b$ for the global system) obeys the relation $R^G_b = 0.98R_b = 0.98 (C_6/\Omega)^{1/6}$, as can be seen in Figure 9a by the dotted line 400. Despite lacking insight into relevance of the factor of 0.98 this already has implications for the size of disc, and hence connectivity, of globally driven systems. Figure 9a shows blockade radius as a function of $\Omega$ for the global simultaneous system, whilst figure 9b shows gradient at that separation as a function of $\Omega$ for the global simultaneous system, wherein the dotted line 404 represents $3.864x(\Omega/C_6)^{1/6}$. The full analytic result is shown as a solid line 402 in both figure 9a and 9b. As can be seen the values of lines 400 and 404 fit with those of line 402.

In Figure 7 we observe that, for $\delta = 0$, for all three systems, $P_{rr}$ is symmetric around the value 0.5, i.e. around $R_b$. A more simple expression to well approximate $P^G_{rr}$ (i.e. $P_{rr}$ for the global system) can be found by translating the sequential (global) curve by $R_b$ ($R^G_b$) and scale by a factor $\Delta^\pi$ ($\Delta^G$, defined that the gradient at $r = r^G_B$ is 1. We determine the value of $\Delta^\pi$ analytically by differentiating Equ. 6 and that of $\Delta^G$ numerically using the expression for $P^G_{rr}$. The resulting gradients are shown in equations 7 and 8:

$$\Delta^\pi = \left.\frac{\partial P^\pi_{rr}}{\partial r}\right|_{r-R^\pi_b} = \frac{3}{R^\pi_b}$$

[Equ. 7]

$$\Delta^G = \left.\frac{\partial P^G_{rr}}{\partial r}\right|_{r-R^G_b} = \frac{3.864}{R^\pi_b}.$$

[Equ. 8]

and can be used to map the global curve onto the sequential one by mapping the atom separation r as follows in equation 9.

$$r \to \frac{\Delta^G}{\Delta^\pi}\left(r - R^G_b\right) + R^H_b$$

[Equ. 9]

With this we can write a simplified expression for $P^G_{rr}$ in equation 10.

$$P^G_{rr} = \frac{1}{1 + \left[\frac{1}{\Omega} \times \left(\frac{C_6}{(1.29r - 0.26R_b)^6}\right)\right]^2}$$

[Equ. 10]

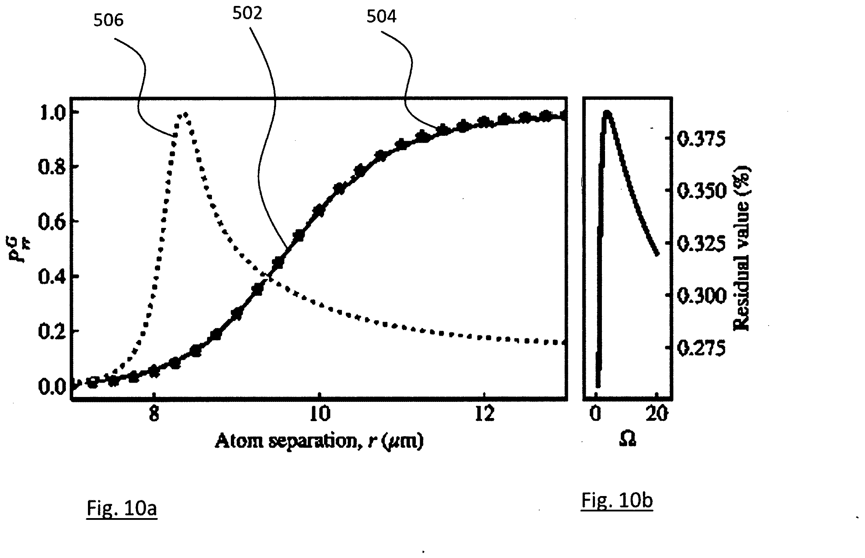

which is shown in Figure 10a compared to the full analytic solution and simulation results, alongside the residuals between the result of this expression and the analytic solution. Figure 10a shows maximum occupation of the doubly-excited state with respect to atom separation for the global simultaneous system wherein: solid line 502 represents the simulation for $\Omega = 6$ and $\delta = 0$; dotted line 504 represents the analytical solution (using Equ.10) for $\Omega = 6$ and $\delta = 0$; dotted line 506 represents the analytical solution for $\Omega = 6$ and $\delta = 8$, obtained by simulation (solid line). As can be seen, the analytical and simulation values fit well for the case of $\Omega = 6$ and $\delta = 0$. A similar simulation was performed (but not shown in the figure) for $\Omega = 6$ and $\delta =$

8, which also showed a good value-fit. The pulse duration used in both simulations was $15\mu s$. Figure 10b shows residual values between the full analytic solution and Equ. 10 for different values of $\Omega$.

We now discuss the case for locally driven systems.

For locally driven systems we restrict ourselves for simplicity to the zero-detuning case with the following Hamiltonian in equation 11.

$$H = \frac{1}{2}\sum_i \Omega_i \sigma_i^x + \sum_{i \neq j} \frac{C_6}{r_{ij}^6} n_i n_j$$

[Equ. 11]

which, even for a 2 atom system is nontrivial to diagonalise. As a result, we cannot solve the Schrodinger equation to find an analytic expression for the maximum occupation of the doubly excited state as we did for the previous systems. Instead, we use the same observation of near symmetry as when building a simplified expression for global simultaneous driving system to find $P^L_{rr}$ (i.e. $P_{rr}$ for the local system) by rescaling r and using the simple expression for $P^\pi_{rr}$. This requires an expression for $R^L_b$ ($R_B$ for the local system) and $\Delta^L$ (the gradient of $P^L_{rr}$ around $R^L_b$) to implement equation 12.

$$r \to \frac{\Delta^L}{\Delta^\pi}\left(r - R^L_b\right) + R^\pi_b$$

[Equ. 12]

The blockade radius $R^L_b$ is found by choosing a symmetric expression across both atoms which obeys the value found using the global system $R^G_b = 0.98R_b$ for $\Omega_0 = \Omega_1$ to match as per equation 13:

$$R^L_b = \frac{1}{2}\left(R^G_{b,0} - R^G_{b,1}\right)$$

[Equ. 13]

where $R^G_{b,1}$, is the blockade radius one would expect from a globally driven system with amplitude $\Omega_i$. The above in equation 13 was compared to values found from simulated data for different $\Omega_0, \Omega_1$ values using simulations sampling from a restricted set of distances around the expected value of $R^L_b$, such that a high resolution in r can be achieved.

It is clear from Equ. 13 that we could instead use the global expression for the pairwise blockade radius and instead consider an effective amplitude of the local system to be the generalized mean of the two amplitudes with exponent -1/6, $\Omega\text{eff} = (½ [\Omega_0^{-1/6} + \Omega_1^{-1/6}]^{-6}$.

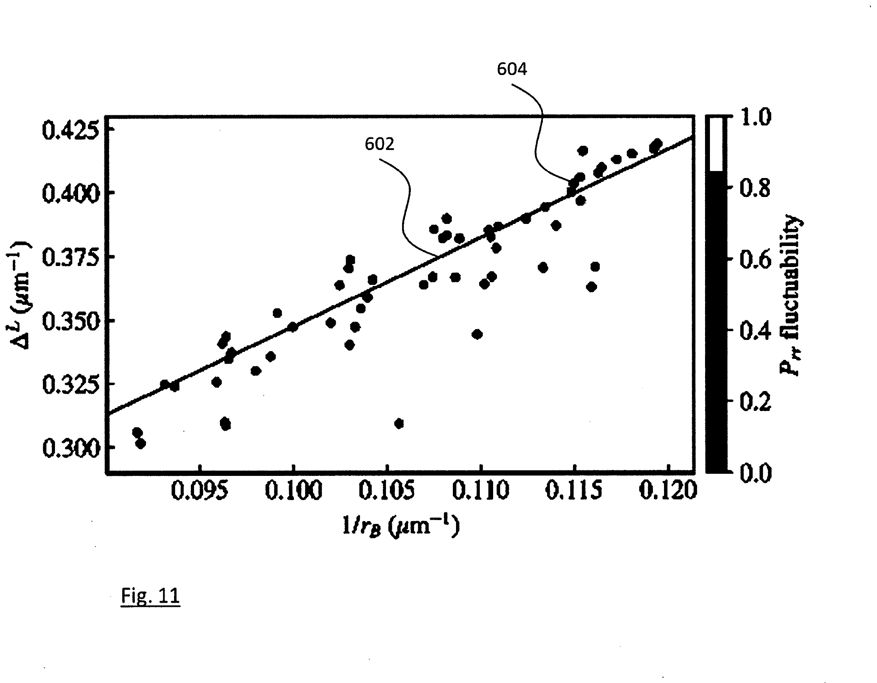

We repeat the process of finding a gradient $\Delta^L$ using simulation results by applying the rescaling described in Equ. 12 to simulated data over a range of distances (5 - 24.75$\mu m$) and finding value of $\Delta^L$ which minimises the least squares difference between $P^\pi_{rr}$ and the rescaled $P^L_{rr}$. This was repeated for 61 combinations of $\Omega_0$ and $\Omega_1$ and the resulting values of $\Delta^L$ are shown as a function of $1/R_b$ ($\Omega = \Omega_{eff}$) in Figure 11 (where $r_B$ is the the term for blockade radius in the figure). We then fit to these data points to find the relation in equation 14:

$$\Delta^L = \frac{\partial P^L_{rr}}{\partial r}\bigg|_{r - R^L_b} = \frac{3.475}{R^\pi_b\left(\Omega = \Omega_{eff}\right)}$$

[Equ. 14]

For a small number of the simulations we observe large fluctuations of $P^L_{rr}$ at random values of r, despite the expectation that the function is monotonic. Figure 11 show gradient for systems with local simultaneous drive obtained by minimizing the distance from Equ. 6 to simulated data, shifted and rescaled according to $r \to (\Delta^L/\Delta^\pi)\cdot[r - R^L_b] + R^\pi_b$. We

attribute a higher error to simulations with larger fluctuations and these errors are then taken into account in the fitting procedure in Figure 11, where data points 64 with larger fluctuations contributing less to the fit 602 of $\Delta^L$ = 3.475 x $(1/R_b)$.

The 'fluctuability' of each simulation was calculated by tracking the changes in $P^L_{rr}$ within non monotonic regions of the data. This fluctuability was considered when fitting the data points to a linear function, where the fit is found by minimizing $\Sigma_i$ di · (1- $F_i$), where $d_i$ is the distance between data point i and the fit, and $F_i$ is the fluctuability of point i.

This enables us to write $P^L_{rr}$ in equation 15 as:

$$P^L_{rr} = \frac{1}{1 + \left[\frac{1}{\Omega_{eff}} \times \left(\frac{C_6}{(1.18r - 0.16R_b)^6}\right)\right]^2}$$

[Equ. 15]

Some portions of the above description present the features of the invention in terms of methods and symbolic representations of operations on information. Portions of the methods may be performed by algorithms. These algorithmic descriptions and representations are the means used by those skilled in the data processing arts to most effectively convey the substance of their work to others skilled in the art. These operations, while described functionally or logically, are understood to be implemented by computer programs. Furthermore, the reference to these arrangements of operations in terms of modules should not be considered to imply a structural limitation and references to functional names is by way of illustration and does not infer a loss of generality. Unless specifically stated otherwise as apparent from the description above, it is appreciated that throughout the description, discussions utilising terms such as "processing" or "identifying" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the method or system include process steps and instructions described herein in the form of an algorithm. It should be understood that the process steps, instructions, of the said method/system as described and claimed, may be executed by computer hardware operating under program control, and not mental steps performed by a human. Similarly, all of the types of data described and claimed may be stored in a computer readable storage medium operated by a computer system, and are not simply disembodied abstract ideas.

The method/system also relates to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

Any controller(s) referred to above may take any suitable form. For instance, the controller(s) may comprise processing circuitry, including the one or more processors, and the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described above. The computer program instructions may arrive at the apparatus via an electromagnetic carrier signal or be copied from a physical entity such as a computer program product, a non-volatile electronic memory device (e.g. flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

**Claims**

1. A method for positioning one or more traps of a plurality of traps; the plurality of traps for holding a plurality of atoms; the plurality of atoms for representing qubits for a neutral atom quantum computation;

   the neutral atom quantum computation for finding one or more solutions to a problem; the problem being applied to data represented by a plurality of nodes of a graph; wherein:

   A) a first atom of the plurality of atoms represents a first node of the plurality of nodes;
   B) a second atom of the plurality of atoms represents a second node of the plurality of nodes that is different to the first node; the first atom being a different atom to the second atom;

   the method comprising:

   I) determining, using a computer processor, a distance between the first atom and the second atom using:

   i) a first value associated with an amplitude of a first Electro-Magnetic, EM, radiation for inputting to the first atom during the neutral atom quantum computation;
   ii) a second value associated with an amplitude of a second EM radiation for inputting to the second atom during the neutral atom quantum computation; the amplitude of the first EM radiation being different to the amplitude of the second EM radiation;

   the distance corresponding to an edge between first and second node;
   II) using the distance to position the one or more traps.

2. A method as claimed in claim 1 wherein the traps comprise optical traps.

3. A method as claimed in claim 2 wherein: the first EM radiation comprises a first wavelength; the second EM radiation comprise a second wavelength;, the optical traps comprise a trapping EM radiation comprising a wavelength different to the first and second wavelengths.

4. A method as claimed in any of claims 1-3 wherein using the distance comprises outputting, to a neutral atom quantum computer, a control signal comprising data associated with the distance.

5. A method as claimed in any of claims 1-4 wherein, using the distance comprises using an optical trap generation system to generate the plurality of traps using the control signal.

6. A method as claimed in any of claims 1-5 wherein, the first EM radiation is for exciting the first atom to a Rydberg energy level.

7. A method as claimed in any of claims 1-6 wherein, the second EM radiation is for exciting the second atom to a Rydberg energy level.

8. A method as claimed in any of claims 1-7 wherein the first EM radiation and second EM radiation are for inputting, simultaneously, to the respective first atom and second atom.

9. A method as claimed in any of claims 1-8 wherein the data comprises a plurality of data elements wherein each of the data elements is represented by a different node of the plurality of nodes.

10. A method as claimed in any of claims 1-9 wherein the plurality of nodes lie about a single Euclidean plane.

11. A method as claimed in any of claims 1-10 wherein each of the plurality of nodes represents an object in a dataset; the problem being applied to the dataset.

12. A method as claimed in any of claims 1-8 wherein the relative positional arrangement of the plurality of atoms is the same as the relative positional arrangement of the plurality of nodes.

13. A method as claimed in any of claims 1-12 wherein the quantum computation comprises the evolution of a Hamiltonian during the quantum computation, the Hamiltonian corresponding to each of the plurality of atoms.

14. A system for positioning one or more traps of a plurality of traps; the plurality of traps for holding a plurality of atoms; the plurality of atoms for representing qubits for a neutral atom quantum computation;

the neutral atom quantum computation for finding one or more solutions to a problem; the problem being applied to data represented by a plurality of nodes of a graph; wherein:

A) a first atom of the plurality of atoms represents a first node of the plurality of nodes;
B) a second atom of the plurality of atoms represents a second node of the plurality of nodes that is different to the first node; the first atom being a different atom to the second atom;

the system comprising:

I) a computer processor configured to determine a distance between the first atom and the second atom using:

i) a first value associated with an amplitude of a first Electro-Magnetic, EM, radiation for inputting to the first atom during the neutral atom quantum computation;
ii) a second value associated with an amplitude of a second EM radiation for inputting to the second atom during the neutral atom quantum computation; the amplitude of the first EM radiation being different to the amplitude of the second EM radiation;

the distance corresponding to an edge between first and second node;
II) a trapping apparatus configured to generate the plurality of traps and use the determined distance to position the one or more traps.

15. A system as claimed in claim 14 comprising a neutral atom quantum computer comprising

A) a chamber for accommodating the plurality of atoms;
B) one or more EM radiation sources for generating the first and second EM radiation;
C) the trapping apparatus.

Fig. 1. PRIOR ART

Fig. 2a PRIOR ART

Fig. 2b. PRIOR ART

Fig. 3a

Fig. 3b

Fig. 3c

EP 4 660 898 A1

Fig. 3d

Fig. 4a

Fig. 4b

EP 4 660 898 A1

Fig. 5

EP 4 660 898 A1

| S102 |
|---|
| determining a first amplitude of first EM radiation using:<br>i)        a distance between the first atom and the second atom; the distance associated with an edge of the graph connecting the first node and the second node;<br>ii)        a value associated with an amplitude of a second EM radiation for inputting to the second atom; the first and second EM radiation for inputting to the respective first and second atoms during the analogue neutral atom quantum computation; the amplitude of the second EM radiation being different to the amplitude of the second EM radiation; |

| S104 |
|---|
| outputting the first EM radiation comprising the first amplitude |

100

**Fig. 6a**

| S112 |
|---|
| determining a distance between the first atom and the second atom using:<br>i)        a first value associated with an amplitude of a first Electro-Magnetic, EM, radiation for inputting to the first atom during the analogue neutral atom quantum computation;<br>ii)        a second value associated with an amplitude of a second EM radiation for inputting to the second atom during the analogue neutral atom quantum computation; the amplitude of the first EM radiation being different to the amplitude of the second EM radiation; the distance corresponding to an edge between first and second node; |

| S114 |
|---|
| using the distance to position the one or more traps |

110

**Fig. 6b**

| S118 |
| --- |

using a computer processor to encode the graph and problem, the encoding comprising at least:

a) a first value associated with a first amplitude of a first Electro-Magnetic, EM, radiation for inputting to the first atom during the quantum computation; the first EM radiation for exciting the first atom to a first Rydberg energy level;

b) a second value associated with a second amplitude of a second EM radiation for inputting to the second atom during the quantum computation; the amplitude of the first EM radiation being different to the amplitude of the second EM radiation; the second EM radiation for exciting the second atom to a second Rydberg energy level;

c) a third value associated with a distance between the first atom and second atom; the distance for allowing a Rydberg blockade between the first atom and the second atom; the Rydberg blockade encoding an edge of the graph between the first node and the second node;

S120

using the computer processor to determine a plurality of parameters from the first, second and third values;

S122

outputting the plurality of parameters to the neutral atom quantum computer;

S124

using the neutral atom quantum computer to perform the quantum computation using the plurality of parameters.

116

### Fig. 6c

Fig. 7

Fig. 8

Fig. 9a

Fig. 9b

Fig. 10a

Fig. 10b

EP 4 660 898 A1

Fig. 11

Europäisches
Patentamt

European
Patent Office

Office européen
des brevets

# EUROPEAN SEARCH REPORT

**Application Number**

EP 24 31 5273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 290 423 A1 (PASQAL [FR]) 13 December 2023 (2023-12-13) * paragraph [0115] - paragraph [0121] * * paragraph [0012] - paragraph [0022] * * paragraph [0070] * ----- | 1-15 | INV. G06N10/40 G06N10/60 |

**TECHNICAL FIELDS SEARCHED (IPC)**

G06N

The present search report has been drawn up for all claims

| Place of search | Date of completion of the search | Examiner |
|---|---|---|
| The Hague | 2 December 2024 | Falco, Gabriele |

EPO FORM 1503 03.82 (P04C01)

## ANNEX TO THE EUROPEAN SEARCH REPORT
## ON EUROPEAN PATENT APPLICATION NO.

EP 24 31 5273

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2024

| Patent document cited in search report | | Publication date | Patent family member(s) | | Publication date |
|---|---|---|---|---|---|
| EP 4290423 | A1 | 13-12-2023 | EP | 4290423 A1 | 13-12-2023 |
| | | | WO | 2023237567 A1 | 14-12-2023 |

EPO FORM P0459

For more details about this annex : see Official Journal of the European Patent Office, No. 12/82

**EP 4 660 898 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2024003088 A